# EUROPEAN PATENT APPLICATION

(11) **EP 1 426 961 A1**
(43) Date of publication of application: **09.06.2004**
(21) Application number: 03257610.0
(22) Date of filing: 03.12.2003
(51) Int. Cl.: G11B 27/32

(54) **Information recording medium, information reproducing apparatus, information reproducing method, and computer program.**

(30) Priority: 04.12.2002 JP 2002352237
(71) Applicant: Pioneer Corporation, Meguro-ku, Tokyo (JP); Kabushiki Kaisha Toshiba, Tokyo (JP)
(72) Inventor: Sawabe, Takao Pioneer Corporation, Tokorozawa-shi Saitama (JP); Koda, Takeshi Pioneer Corporation, Tokorozawa-shi Saitama (JP); Imamura, Akira c/o Pioneer Corporation, Tokorozawa-shi Saitama (JP); Mimura, Hideki Intellectual Property Division, Tokyo (JP); Taira, Kazuhiko Intellectual Property Division, Tokyo (JP)
(74) Representative: Haley, Stephen

(57) **Abstract**

On an information recording medium (100), there are recorded: one or a plurality of first entity information (VTS) (111), which is compressed and encoded by a first compressing and encoding method, for individually constituting Titles; first management information (VMG) (110) for managing and controlling the first entity information; one or a plurality of second entity information (VTS2) (121), which is compressed and encoded by a second compressing and encoding method, for individually constituting Titles; and second management information (VMG2) (120) for managing and controlling the first and second entity information.

## Description

The present invention relates to an information recording medium, such as a DVD; an information reproducing apparatus, such as a DVD player; an information reproducing method; and a computer program for making a computer function as the information reproducing apparatus.

Conventionally, on a "DVD-Video disc", which is an optical disc based on the DVD-Video standard, there are recorded video information compressed and encoded by Moving Picture Expert Group (MPEG) 1 or MPEG 2, each of which is one example of a compressing and encoding method. According to the DVD Video disc, it has made progress in the compressing and encoding of recording data and in its high-density recording, enough to record contents information with an about one movie volume on one disc. On this type of DVD, usually, video information is recorded in accordance with a Standard Definition (SD) standard.

On the other hand, a "DVD-Audio disc", which is a disc based on the DVD-Audio standard, is also commercialized. A DVD compatible player, which can reproduce both this "DVD-Audio disc" and the above-described "DVD-Video disc", is also developed.

Even for a player compatible with the Audio-DVD, for example, there is a technique capable of reproducing only audio information, which is disclosed in Japanese Patent Application Laying Open NO. Hei 11-164243 and Japanese Patent Application Laying Open NO. 2000-285648. Moreover, there is a technique of using a compatible player to effectively reproduce video information and audio information recorded on a DVD with video zones and audio zones, which is disclosed in Japanese Patent Application Laying Open NO. Hei 11-265563 and Japanese Patent Application Laying Open NO. 2000-293950, for example.

Even to this type of information recording medium, there is a general request for progressing from the recording of only the contents information based on the SD standard, to the recording of the contents information based on a High Definition (HD) standard, which has been already practically used, i.e. so-called-"High Vision" contents information.

In order to respond such a request, it is firstly conceivable to develop a DVD for a blue laser, which allows high-density recording, and further to develop a DVD player which uses the blue laser and which can reproduce this DVD. However, there are still many technical or economical problems now in order to put the DVD and the DVD player into practical use.

On the other hand, in order to respond such a request, it is also conceivable (i) to employ a compressing and encoding method with higher efficiency than that of MPEG 1 or MPEG 2 which are currently used, such as MPEG 4 part 10 coding (which is simply referred to as "MPEG 4" hereinafter, as occasion demands), (ii) to record, e.g., the High Vision contents information on an existing DVD for a red laser, and (iii) to reproduce this recorded information with a DVD player which uses the red laser.

However, the following problem occurs even if about two-hour High Vision contents information can be recorded on one DVD by the highly efficient compressing and encoding, such as MPEG 4. Namely, the problem is that some DVD players, which are already spread worldwide, cannot reproduce the contents information compressed and encoded at high efficiency by e.g. MPEG 4. More specifically, there is a technical problem that even if there are DVDs on which the High Vision contents information are recorded, these DVDs cannot be reproduced by some conventional DVD players without a decoder compatible with MPEG 4. To put it the other way, if the DVDs which cannot be reproduced by the already spread DVD players are sold along with DVDs which can be reproduced by the already spread DVD players, this is wasteful and causes confusion in the market. This also has hardly any hope for commercial success.

It is therefore an object of the present invention to provide: an information recording medium which can be reproduced even by an information reproducing apparatus for the conventional compressing and encoding method, such as MPEG 1 and MPEG 2, and which can be also reproduced even by an information reproducing apparatus for the advanced highly efficient compressing and encoding method, such as MPEG 4; an information recording apparatus and method which enable the information recording medium to be reproduced; and a computer program for making a computer function as such an information reproducing apparatus.

The above object of the present invention can be achieved by a first information recording medium on which there are recorded: one or a plurality of first entity information, which is compressed and encoded by a first compressing and encoding method, for individually constituting Titles, each of which is a logical combination of contents including video; first management information for managing and controlling the first entity information; one or a plurality of second entity information, which is compressed and encoded by a second compressing and encoding method, which is different from the first compressing and encoding method, for individually constituting Titles, each of which is a logical combination of contents same as or different from the contents of said first entity information; and second management information for managing and controlling the first and second entity information.

According to the first information recording medium of the present invention, the first entity information, e.g. VTS (VTS#1, VTS#2, ..., VTS#n) described later, is compressed and encoded by the first compressing and encoding method, e.g. MPEG 2 or MPEG 1, and individually constitutes Titles. Here, the "Title" is a logically combined unit, such as one movie, one drama, one sports program, and one game. The "Title" includes contents of both video (i.e., picture) and audio (i.e., sound) or contents of video only. Namely, the first entity information is the SD standard video information, which is recorded on a traditional DVD, or the like, for example. On the other hand, the second entity information, e.g. VTS2 (VTS2#1, VTS2#2, ..., VTS2#m) described later, is compressed and encoded by the second compressing and encoding method, e.g. MPEG 4, which is different from the first compressing and encoding method, and individually constitutes Titles. Namely, the second entity information is the HD standard or High Vision video information, which is not recorded on the traditional DVD, or the like, for example. In this case, the Title constructed by the second entity information and the Title constructed by the first entity information may include the same contents, such as the same movie but having different standards and picture quality. Alternatively, they may include contents mutually having some type of relations, such as a digest version and a special version. They may further include non-identical contents, such as a movie having completely different .contents.

Upon reproducing the information recording medium, it is possible to perform efficient reproduction control, which varies depending on whether or not there is a function of reproducing the second entity information on the information reproducing apparatus side, by using the first or second management information. For example, by performing management and control based on the second management information, e.g. VMG2 described later, on one hand, the first entity information can be decoded by using the decoding processing corresponding to the first compressing and encoding method, such as MPEG 2 or MPEG 1. Thus, the corresponding Titles can be reproduced, such as the SD standard Titles. On the other hand, the second entity information can be decoded by using the decoding processing corresponding to the second compressing and encoding method, such as MPEG 4. Thus, the corresponding Titles can be reproduced, such as the HD standard Titles. In this case, if the second management information is recorded, both the first and second entity information can be reproduced and controlled by referring to this second management information without any necessity to refer to the first management information. Namely, when the information recording medium is reproduced by a so-called compatible information reproducing apparatus which can reproduce both the first and second entity information, it is enough to refer to the second management information without reference to the first management information. Therefore, it is possible to reproduce both the first and second entity information extremely efficiently.

In contrast with this, when the information recording medium is reproduced by an information reproducing apparatus which does not have a function of reproducing the second entity information (i.e. which does not have a decoder for MPEG 4) but which can reproduce the first entity information (i.e. which has a decoder for MPEG 2 or MPEG 1), the first entity information can be reproduced by neglecting the second entity information and the second management information and instead by using the first management information. Therefore, even by the information reproducing apparatus which does not have a function of reproducing the second entity information, such as an existing DVD player, the information recording medium can be reproduced partially or in some type of form (even if this reproduction cannot cover all of the information recorded on the information recording medium). Namely, even the information reproducing apparatus with relatively low functions, such as the existing DVD player, can avoid such a situation that it cannot reproduce the information recording medium at all, or can avoid reproduction inability.

Consequently, the first information recording medium of the present invention can be reproduced even by the information reproducing apparatus for the conventional compressing and encoding method, such as MPEG 2 and MPEG 1. It can be also reproduced by the information reproducing apparatus for the more advanced highly efficient compressing and encoding method, such as MPEG 4. Therefore, it is possible to provide the market with an information recording medium, such as the DVD for a red laser, on which the HD standard Titles are recorded by using the MPEG 4, as the information recording medium which can be reproduced in some type of form or partially even by the existing DVD player. Namely, it is possible to avoid a situation that a purchaser of the information recording medium cannot reproduce this medium at all. Moreover, the provision of the information recording medium for the market can promote the spread of DVD players with higher functions, which allows the decoding processing based on MPEG 4. As described above, the present invention is extremely meaningful in practice.

In one aspect of the first information recording medium, the second management information includes, for each Title: number information for indicating an identification number of the first or second entity information, which is uniquely given to each Title; and identification information for identifying whether the number information indicates the identification number of the first entity information or the identification number of the second entity information.

According to this aspect, the second management information, e.g. the VMG2 described later, includes the number information, e.g. "VTSN" described later, for indicating the identification number of the first entity information, e.g. the VTS (VTS#1, VTS#2, ..., VTS#n) described later, which is uniquely given to each Title. Alternatively, the second management information includes the number information, e.g. "VTS2N" described later, for indicating the identification number of the second entity information, e.g. the VTS2 (VTS2#1, VTS2#2, ..., VTS2#m) described later, which is uniquely given to each Title. Moreover, the second management information includes for each Title the identification information, e.g. TT_TY_ID described later, for identifying whether the number information indicates the identification number of the first entity information or the identification number of the second entity information. Therefore, upon reproducing the information recording medium, it is possible to reproduce both the first entity information compressed and encoded by the first compressing and encoding method and the second entity information compressed and encoded by the second compressing and encoding method, by referring to the identification information and the number information included in the second management information. Namely, while a series of identification numbers (e.g. sequence number #1, #2, #3,... or the like) is given to the first and second entity information, it can be judged which identification number indicated by the number information corresponds to which entity information. Therefore, either entity information can be reproduced without any problems. In addition, the first management information is unnecessary for this type of reproduction.

In another aspect of the first information recording medium, the second management information includes: attribute information for indicating the compressing and encoding method for each of the first entity information; and attribute information for indicating the compressing and encoding method for each of the second entity information.

According to this aspect, the second management information, e.g. the VMG2 described later, includes attribute information, e.g. "VTS_V_ATR" described later, for indicating the compressing and encoding method for each of the first entity information, e.g. the VTS (VTS#1, VTS#2, ..., VTS#n) described later. Moreover, the second management information includes attribute information, e.g. "VTS2_V_ATR" described later, for indicating the compressing and encoding method for each of the second entity information, e.g. the VTS2 (VTS2#1, VTS2#2, ..., VTS2#m) described later. Namely, the attribute information indicates that each of the first entity information uses the first compressing and encoding method (e.g. MPEG 2 or the like) and that each of the second entity information uses the second compressing and encoding method (e.g. MPEG 4 or the like). Therefore, upon reproducing the information recording medium, by referring to the attribute information included in the second management information, both the first and second entity information can be reproduced without any problems by using the appropriate decoding processing corresponding to the compressing and encoding method. In addition, the first management information is unnecessary for this type of reproduction.

In another aspect of the first information recording medium, the second management information includes: total number information for indicating the total number of the first entity information; and total number information for indicating the total number of the second entity information.

According to this aspect, the second management information, e.g. the VMG2 described later, includes the total number information, e.g. "VTS_Ns" described later, for indicating the total number of the first entity information, e.g. the VTS (VTS#1, VTS#2, ..., VTS#n) described later. Moreover, the second management information includes the total number information, e.g. "VTS2_Ns" described later, for indicating the total number of the second entity information, e.g. the VTS2 (VTS2#1, VTS2#2, ..., VTS2#m) described later. Therefore, upon reproducing the information recording medium, by referring to the total number information included in the second management information, even if there are any number of the first entity information, or in place of or in addition to this condition, even if there are any number of the second entity information, by referring to the second management information on the premise that the second management information is recorded in correspondence with the total number indicated by the total number information, each entity information can be reproduced without any problems. In addition, the first management information is unnecessary for this type of reproduction.

In another aspect of the first information recording medium, the second management information includes: first menu information, which includes at least video information compressed and encoded by the first or second compressing and encoding method, for indicating a menu for user selection about at least the second entity information out of the first and second entity information; and attribute information for indicating the first or second compressing and encoding method by which the first menu information is compressed and encoded.

According to this aspect, the second management information, e.g. the VMG2 described later, includes the first menu information, e.g. "VMGM2_VOBs" described later. This first menu information includes at least video information compressed and encoded by the first or second compressing and encoding method, as well as indicating a menu for user selection about the first and second entity information or indicating a menu for user selection about the second entity information. Moreover, the second management information includes the attribute information, e.g. "VMGM2_V_ATR" described later, for indicating the first or second compressing and encoding method by which the first menu information is compressed and encoded. Therefore, upon reproducing the information recording medium, it is possible to show the menu for user selection about the first or second entity information, as video alone or video with audio, by performing the decoding processing, which corresponds to the first or second compressing and encoding method indicated by the attribute information included in the second management information, with respect to the first menu information included in the second management information. For example, a user can select a desired Title, by remote control, panel button operation, or the like, from the menu in which Titles including the first entity information and Titles including the second entity information are mixed and listed, or from the menu in which Titles including the second entity information are only listed. In addition, the first management information is unnecessary for this type of menu display.

In another aspect of the first information recording medium, the second entity information includes: second menu information, which includes at least video information compressed and encoded by the first or second compressing and encoding method, for indicating a menu for user selection about at least the second entity information out of the first and second entity information; and attribute information for indicating the first or second compressing and encoding method by which the second menu information is compressed and encoded.

According to this aspect, the second entity information, e.g. the VTS2 (VTS2#1, VTS2#2, ..., VTS2#m) described later, includes the second menu information, e.g. "VTSM2_VOBs" described later. This second menu information includes at least video information compressed and encoded by the first or second compressing and encoding method, as well as indicating a menu for user selection about the first and second entity information or indicating a menu for user selection about the second entity information. Moreover, the second entity information includes the attribute information, e.g. "VTSM2_V_ATR" described later, for indicating the first or second compressing and encoding method by which the second menu information is compressed and encoded. Therefore, upon reproducing the information recording medium, it is possible to show the menu for user selection about the first or second entity information, as video alone or video with audio, by performing the decoding processing, which corresponds to the first or second compressing and encoding method indicated by the attribute information included in the second management information, with respect to the second menu information included in the second entity information. For example, a user can select a desired Title, by remote control, panel button operation, or the like, from the menu in which Titles including the first entity information and Titles including the second entity information are mixed and listed, or from the menu in which Titles including the second entity information are only listed. In addition, the first management information is unnecessary for this type of menu display.

In another aspect of the first information recording medium, the first management information includes: third menu information, which includes at least video information compressed and encoded by the first compressing and encoding method, for indicating a menu for user selection about the first entity information; and attribute information for indicating the first compressing and encoding method by which the third menu information is compressed and encoded.

According to this aspect, the first management information, e.g. the VMG described later, includes the third menu information, e.g. "VMGM_VOBs" described later. This third menu information includes at least video information compressed and encoded by the first compressing and encoding method, as well as indicating a menu for user selection about the first entity information. Moreover, the first management information includes the attribute information, e.g. "VMGM_V_ATR" described later, for indicating the first compressing and encoding method by which the third menu information is compressed and encoded. In other words, this attribute information indicates that the third menu information is encoded by the first compressing and encoding method. Therefore, upon reproducing the information recording medium, it is possible to show the menu for user selection about the first entity information, as video alone or video with audio, by performing the decoding processing, which corresponds to the first compressing and encoding method indicated by the attribute information included in the first management information, with respect to the third menu information included in the-first management information. For example, a user can select a desired Title, by remote control, panel button operation, or the like, from the menu in which Titles including the first entity information are only listed. In this case, the second entity information or the second management information may be neglected. Namely, the reproduction operation related to this aspect is preferably performed by an information reproducing apparatus, such as an existing DVD player, which does not have a function of reproducing the second entity information.

In another aspect of the first information recording medium, the first entity information includes: fourth menu information, which includes at least video information compressed and encoded by the first compressing and encoding method, for indicating a menu for user selection about the first entity information; and attribute information for indicating the first compressing and encoding method by which the fourth menu information is compressed and encoded.

According to this aspect, the first entity information, e.g. the VTS (VTS#1, VTS#2, ..., VTS#n) described later, includes the fourth menu information, e.g. "VTSM_VOBs" described later. This fourth menu information includes at least video information compressed and encoded by the first compressing and encoding method, as well as indicating a menu for user selection about the first entity information. Moreover, the first entity information includes the attribute information, e.g. "VTSM_V_ATR" described later, for indicating the first compressing and encoding method by which the fourth menu information is compressed and encoded. In other words, this attribute information indicates that the fourth menu information is encoded by the first compressing and encoding method. Therefore, upon reproducing the information recording medium, it is possible to show the menu for user selection about the first entity information, as video alone or video with audio, by performing the decoding processing, which corresponds to the first compressing and encoding method indicated by the attribute information included in the first entity information, with respect to the fourth menu information included in the first entity information. For example, a user can select a desired Title, by remote control, panel button operation, or the like, from the menu in which Titles including the first entity information are only listed. In this case, the second entity information or the second management information may be neglected. Namely, the reproduction operation related to this aspect is preferably performed by an information reproducing apparatus, such as an existing DVD player, which does not have a function of reproducing the second entity information.

In another aspect of the first information recording medium, the second management information manages and controls the first entity information, by specifying the first management information, through the specified first management information.

According to this aspect, the second management information, e.g. the VMG2 described later, manages and controls the first entity information, by specifying the first management information, e.g. the VMG described later, through this specified first management information. For example, the first management information may include: the number information (e.g. the VTSN described later) for indicating the identification number of the first entity information; the identification information (e.g. the TT_TY_ID described later) for identifying that this number information indicates the identification number of the first entity information; the attribute information (e.g. the "VTS_V_ATR" described later) for indicating the compressing and encoding method for each of the first entity information; the total number information (e.g. the "VTS_Ns" described later) for indicating the total number of the first entity information; various menu information (e.g. the VMGM_VOBs or the like described later); various attribute information (e.g. the "VMGM_V_ATR" or the like described later) which corresponds to the various menu information; and the like, as described above. The second management information maintains the recording positions for the above information in the first management information with pointers or the like, in place of including the information directly. When it is necessary to refer to the information, an information reproducing apparatus accesses the first management information indicated by the pointers of the second management information or the like, and it performs reproduction processing based on this access. As described above, if the medium takes such a construction that the second management information performs the management and control through the specified first management information, both an information reproducing apparatus capable of reproducing the second entity information and an information reproducing apparatus incapable of reproducing the second entity information become capable of using the first management information, which can increase frequency in use of the first management information. Therefore, in this sense, it is also possible to increase the efficiency of use of the first and second management information as a whole. Incidentally, in any cases, the second entity information and the second management information may be neglected on the information reproducing apparatus incapable of reproducing the second entity information.

The above object of the present invention can be achieved by a second information recording medium on which there are recorded: one or a plurality of entity information, which is compressed and encoded by a predetermined compressing and encoding method, for individually constituting Titles, each of which is a logical combination of contents including video; and management information for managing and controlling the entity information, the management information including: number information for indicating an identification number of the entity information, which is uniquely given to each Title; total number information for indicating the total number of the entity information; and information for indicating a fact that there is no record of another entity information compressed and encoded by another compressing and encoding method, which is different from the predetermined compressing and encoding method.

According to the second information recording medium of the present invention, the entity information, e.g. the VTS2 (VTS2#1, VTS2#2, ..., VTS2#m) described later, is compressed and encoded by a compressing and encoding method, e.g. MPEG 4, and individually constitutes Titles. Namely, the entity information is the HD standard or High Vision video information, which is not recorded on the traditional DVD, or the like, for example. Moreover, the management information includes: the number information, e.g. the "VTS2N" described later, for indicating the identification number of the entity information, which is uniquely given to each Title; and the total number information, e.g. the "VTS2_Ns" described later, for indicating the total number of the entity information. Moreover, the management information includes another information, e.g. the "VTS_Ns" described later, for indicating the fact that there is no record of another entity information, e.g. the VTS (VTS#1, VTS#2, ..., VTS#n) described later, which is compressed and encoded by another compressing and encoding method, e.g. MPEG 2 (or MPEG 1).

Therefore, upon reproducing the information recording medium by using a compatible information reproducing apparatus compatible with MPEG 4 and MPEG 2 (or MPEG 1), it is possible to perform efficient reproduction control by referring to the number information and the total number information included in the management information, e.g. the VMG 2 described later. In this case, by referring to the another information included in the management information, it is possible to identify quickly that the SD standard Titles are not recorded, for example. Also, the reproduction of the HD standard Titles can be appropriately performed after identifying that. In this case, upon reproducing the information recording medium by the compatible information reproducing apparatus, it is enough to refer to the management information, so that the entity information can be reproduced extremely efficiently.

As a result, according to the second information recording medium of the present invention, any confusion or problems does not occur even if the above-described compatible information reproducing apparatus compatible with the MPEG 4 and the MPEG 2 (or MPEG 1) is introduced in the market, and at the same time, even if the information recording medium compatible with both MPEG 4 and MPEG 2 (or MPEG 1), which is the above-described first information recording medium of the present information, and the information recording medium compatible only with the MPEG 4 are introduced in the market. Especially when the compatible information reproducing apparatus reproduces the information recording medium compatible only with the MPEG 4, for example, it can reproduce extremely efficiently. As described, the present invention is extremely useful in practice.

In one aspect of the second information recording medium the management information includes: menu information, which includes at least video information compressed and encoded by the predetermined compressing and encoding method or by the another compressing and encoding method, which is different from the predetermined compressing and encoding method, for indicating a menu for user selection about the entity information; and attribute information for indicating the compressing and encoding method by which the menu information is compressed and encoded.

According to this aspect, the management information, e.g. the VMG2 described later, includes the menu information, e.g. the "VMGM2_VOBs" described later. This menu information includes at least video information compressed and encoded by the compressing and encoding method, as well as indicating a menu for user selection about the entity information. Moreover, the management information includes the attribute information, e.g. the "VMGM2_V_ATR" described later, for indicating the compressing and encoding method by which the menu information is compressed and encoded. Therefore, upon reproducing the information recording medium, it is possible to show the menu for user selection about the entity information, as video alone or video with audio, by performing the decoding processing, which corresponds to the compressing and encoding method indicated by the attribute information included in the management information, with respect to the menu information included in the management information. For example, a user can select a desired Title, by remote control, panel button operation, or the like, from the menu in which Titles including the entity information are listed.

Alternatively, in another aspect of the second information recording medium, the entity information includes: menu information, which includes at least video information compressed and encoded by the predetermined compressing and encoding method or by the another compressing and encoding method, which is different from the predetermined compressing and encoding method, for indicating a menu for user selection about the entity information; and attribute information for indicating the compressing and encoding method by which the menu information is compressed and encoded.

According to this aspect, the entity information, e.g. the VTS2 described later, includes the menu information, e.g. the "VTSM2_VOBs" described later. This menu information includes at least video information compressed and encoded by the compressing and encoding method, as well as indicating a menu for user selection about the entity information. Moreover, the entity information includes the attribute information, e.g. the "VTSM2_V_ATR" described later, for indicating the compressing and encoding method by which the menu information is compressed and encoded. Therefore, upon reproducing the information recording medium, it is possible to show the menu for user selection about the entity information, as video alone or video with audio, by performing the decoding processing, which corresponds to the compressing and encoding method indicated by the attribute information included in the entity information, with respect to the menu information included in the entity information. For example, a user can select a desired Title, by remote control, panel button operation, or the like, from the menu in which Titles including the entity information are listed.

The above object of the present invention can be achieved by a first information reproducing apparatus for reproducing the above-described information recording medium (including its various aspects), provided with: a reading device for reading out information from the information recording medium; a judgment device for judging whether or not the second management information is recorded on the information recording medium on the basis of the read information; and a reproduction output device (i) for reproducing and outputting the first or second entity information in accordance with the second management information if it is judged by the judgment device that the second management information is recorded and (ii) for reproducing and outputting the first entity information in accordance with first management information if it is judged by the judgment device that the second management information is not recorded.

According to the first information reproducing apparatus of the present invention, firstly, the reading device constructed of an optical pickup or the like reads out information from the information recording medium. Secondly, on the basis of the read information, the judgment device constructed of a Central Processing Unit (CPU) or the like judges whether or not the second management information, e.g. the VMG2 described later, is recorded on the information recording medium. If this judgment device judges that the second management information is recorded, the reproduction output device constructed of a CPU, a decoder, or the like reproduces and outputs the first or second entity information (e.g. the VTS#1, VTS#2, ... VTS#n, or the VTS2#1, VTS2#2, ... VTS#m described later) in accordance with the second management information included in the read information. Namely, in this case, the above-described first information recording medium compatible with MPEG 4 and MPEG 2 (or MPEG 1) can be reproduced efficiently. On the other hand, if it is judged by the judgment device that the second management information is not recorded, the reproduction output device reproduces and outputs the first entity information (e.g. the VTS#1, VTS#2, ... VTS#n described later) in accordance with the first management information, e.g. the VMG described later, included in the read information. Namely, in this case, the above-described information recording medium compatible with MPEG 2 (or MPEG 1), such as an existing DVD player, can be reproduced efficiently.

As a result, according to the first information reproducing apparatus of the present invention, it is constructed as a compatible DVD player compatible with MPEG 4 and MPEG 2 (or MPEG 1), for example, and it can reproduce the first information recording medium efficiently. Moreover, it can reproduce the first entity information efficiently on the basis of the first management information even on an information recording medium different from the first information recording medium, such as an existing DVD, on which the second entity information and the second management information are not recorded.

Incidentally, in response to various aspects in the first information recording medium of the present invention described above, the first information reproducing apparatus of the present invention can also take various aspects.

The above object of the present invention can be achieved by a second information reproducing apparatus for reproducing the aspect of the first information recording medium that the second management information includes the number information, e.g. the VTSN or the VTS2N described later, and the identification information, e.g. the TT_TY_ID described later, for each Title, provided with: a selection device for selecting a Title to be reproduced out of the Titles recorded on the information recording medium; a reading device for reading out information from the information recording medium; a judgment device for judging whether or not the second management information is recorded on the information recording medium on the basis of the read information; a first identification device for identifying an identification number of the first or second entity information corresponding to the selected Title, in accordance with the number information in the second management information if it is judged by the judgment device that the second management information is recorded; a second identification device for identifying whether the recognized identification number is the identification number of the first entity information or the identification number of the second entity information, on the basis of identification information in the second management information; and a reproduction output device for reproducing and outputting the first or second entity information corresponding to the selected Title on the basis of the identification results identified by the first and second identification devices.

According to the second information reproducing apparatus of the present invention, firstly, the reading device constructed of an optical pickup or the like reads out information from the information recording medium. Shortly before or after this reading, the selection device constructed of a remote controller, a panel switch, a CPU, or the like, selects a Title to be reproduced out of the Titles recorded on the information recording medium. Then, the judgment device constructed of a CPU or the like judges whether or not the second management information, e.g. the VMG2 described later, is recorded on the information recording medium on the basis of the read information. If this judgment device judges that the second management information is recorded, the first identification device constructed of a CPU or the like identifies the identification number of the first or second entity information corresponding to the selected Title in accordance with the number information (e.g. the VTSN or the VTS2N described later) in the second management information included in the read information. Moreover, the second identification device constructed of a CPU or the like identifies whether this recognized identification number is the identification number of the first entity information or the identification number of the second entity information, on the basis of the identification information (e.g. the TT_TY_ID described later) in the second management information included in the read information. Then, the reproduction output device constructed of a CPU, a decoder, or the like reproduces and outputs the first or second entity information (e.g. the VTS#1, VTS#2, ... VTS#n, or the VTS2#1, VTS2#2, ... VTS#m described later) corresponding to the selected Title in accordance with the identification results identified by the first and second identification devices. Namely, in this case, the above-described first information recording medium compatible with MPEG 4 and MPEG 2 (or MPEG 1) can be reproduced efficiently.

As a result, according to the second information reproducing apparatus of the present invention, it is constructed as a compatible DVD player compatible with MPEG 4 and MPEG 2 (or MPEG 1), for example, and it can reproduce the one aspect of the above-described first information recording medium of the present invention efficiently. Moreover, the first entity information can be reproduced efficiently on the basis of the first management information even in an existing DVD on which the second entity information and the second management information are not recorded, as in the case of the first information reproducing apparatus described above.

In one aspect of the first or second information reproducing apparatus of the present invention, the reproduction output device includes a decoding device which includes a first decoder corresponding to the first compressing and encoding method and a second decoder corresponding to the second compressing and encoding method.

According to this aspect, under the control of a control device constructed of a CPU or the like, it is selected whether the first decoder decodes the first entity information or the second decoder decodes the second entity information, depending on the judgment result judged by the judgment device. In the case of reproducing the first entity information, the first decoder compatible with MPEG 2 (or MPEG 1) performs decoding processing corresponding to the first compressing and encoding method. On the other hand, in the case of reproducing the second entity information, the second decoder compatible with MPEG 4 performs decoding processing corresponding to the second compressing and encoding method.

Incidentally, in the first information recording medium described above, the HD standard video information highly efficiently compressed and encoded by MPEG 4 is preferably recorded as the second entity information, for example. Alternatively, in the second information recording medium described above, the HD standard video information highly efficiently compressed and encoded by MPEG 4 is preferably recorded as the entity information, for example. However, in the first information recording medium described above, the SD standard video information and the other standard video information highly efficiently compressed and encoded by MPEG 4 may be recorded as the second entity information, for example. Alternatively, in the second information recording medium described above, the SD standard video information and the other standard video information highly efficiently compressed and encoded by MPEG 4 may be recorded as the entity information, for example. Even in these cases, it is possible to record more entity information, as the second entity information in the first information recording medium or as the entity information in the second information recording medium, by more highly efficient compressing and encoding than that by conventional MPEG 2 (or MPEG 1), for example.

The above object of the present invention can be achieved by a first information reproducing method of reproducing the above-described first information recording medium (including its various aspects), provided with: a judgment process of judging whether or not the second management information is recorded on the information recording medium on the basis of information read by a reading device for reading out the information from the information recording medium; and a reproduction output process (i) of reproducing and outputting the first or second entity information in accordance with the second management information if it is judged by the judgment process that the second management information is recorded and (ii) of reproducing and outputting the first entity information in accordance with first management information if it is judged by the judgment process that the second management information is not recorded.

According to the first information reproducing method of the present invention, as with the above-described first information reproducing apparatus, it can reproduce the above-described first information recording medium (including its various aspects) relatively efficiently.

Incidentally, in response to various aspects in the first information recording medium described above, the first information reproducing method of the present invention can also take various aspects.

The above object of the present invention can be achieved by a second information reproducing method of reproducing the aspect of the first information recording medium that the second management information includes the number information, e.g. the VTSN or the VTS2N described later, and the identification information, e.g. the TT_TY_ID described later, for each Title, provided with: a judgment process of judging whether or not the second management information, e.g. the VMG2 described later, is recorded on the information recording medium on the basis of information read by a reading device for reading out the information from the information recording medium; a first identification process of identifying an identification number of first or second entity information, e.g. the VTS#1, VTS#2, ... VTS#n, or the VTS2#1, VTS2#2, ... VTS#m described later, corresponding to a Title which is selected as a Title to be reproduced out of the Titles recorded on the information recording medium, in accordance with the number information, the VTSN or the VTS2N described later, in the second management information if it is judged by the judgment process that the second management information is recorded; a second identification process of identifying whether the recognized identification number is the identification number of the first entity information or the identification number of the second entity information, on the basis of the identification information, the TT_TY_ID described later, in the second management information; and a reproduction output process of reproducing and outputting the first or second entity information corresponding to the selected Title on the basis of identification results identified by the first and second identification processes,

According to the second information reproducing method of the present invention, as with the above-described second information reproducing apparatus, it can reproduce the above-described one aspect of the first information recording medium relatively efficiently.

The above object of the present invention can be achieved by a computer program which may be stored in a program storage device readable by a computer, or which may be carried as a computer data signal by a carrier wave. The computer program makes the computer function as the first or second information reproducing apparatus. More specifically, it can be achieved by the computer program to make the computer function as at least one of the reading device, the judgment device, and the reproduction output device in the above-described first information reproducing apparatus. Alternatively, it can be achieved by the computer program to make the computer function as at least one of the selection device, the reading device, the judgment device, the first identification device, the second identification device, and the reproduction output device in the above-described second information reproducing apparatus.

According to the computer program of the present invention, the above described first or second information recording apparatus of the present invention can be embodied relatively readily, by loading the computer program from a recording medium for storing the computer program, such as a ROM (Read Only Memory), a CD-ROM (Compact Disc - Read Only Memory), a DVD-ROM (DVD Read Only Memory), a hard disk or the like, into the computer, or by downloading the computer program, which may be a carrier wave, into the computer via a communication device. More specifically, the computer program may include computer readable codes to cause the computer (or may comprise computer readable instructions for causing the computer) to function as the above-described first or second information recording apparatus.

Incidentally, in response to various aspects in the first information recording medium described above, the computer program of the present invention can also take various aspects.

The nature, utility, and further features of this invention will be more clearly apparent from the following detailed description with reference to preferred embodiments of the invention when read in conjunction with the accompanying drawings briefly described below.

As explained above, according to the first information recording medium of the present invention, the first and second entity information and the first and second management information are recorded therein, so that the medium can be reproduced by an information reproducing apparatus compatible with MPEG 2 (or MPEG 1), for example, and even by an information reproducing apparatus compatible with MPEG 4, for example. According to the second information recording medium of the present invention, the entity information, the number information, the total' number information, and the management information including the other information are recorded therein, so that the medium can be reproduced by the information reproducing apparatus compatible with MPEG 4, for example. According to the first information reproducing apparatus of the present invention, it is provided with: the reading device; the judgment device; and the reproduction output device, so that it can reproduce the above-described first information recording medium of the present invention efficiently. According to the second information reproducing apparatus of the present invention, it is provided with: the selection device; the reading device; the judgment device; the first identification device; the second identification device; and the reproduction output device, so that it can reproduce the one aspect of the above-described first information recording medium of the present invention-efficiently. According to the first information reproducing method of the present invention, it is provided with: the judgment process; and the reproduction output process, so that it can reproduce the above-described first information recording medium of the present invention efficiently. According to the second information reproducing method of the present invention, it is provided with: the judgment process; the first identification process; the second identification process; and the reproduction output process, so that it can reproduce the one aspect of the above-described first information recording medium of the present invention efficiently. According to the computer program of the present invention, it causes a computer to function as the above-described first or second information reproducing apparatus, so that it can cause the above-described first information recording medium of the present invention to be reproduced efficiently.

In the Drawings;
FIG. 1 shows the basic structure of an optical disc, which is one embodiment of an information recording medium of the present invention, wherein the upper part is a substantial plan view of the optical disc having a plurality of areas and the lower part, which corresponds to this upper part, is a schematic diagram of the area structure in its radial direction;
FIG. 2 is a schematic diagram showing a data structure recorded on the optical disc related to the embodiment;
FIG. 3 is a schematic diagram showing the detail of a data structure in a Video Manager (VMG) shown in FIG. 2;
FIG. 4 is a schematic diagram showing the detail of a data structure in a Title-Search Pointer Table (TT_SRPT) shown in FIG. 3;
FIG. 5 is a schematic diagram showing the detail of a data structure in a Video Title Set (VTS) shown in FIG. 2;
FIG. 6 is a schematic diagram showing the detail of a data structure in a VMG2 shown in FIG. 2;
FIG. 7 is a schematic diagram showing the detail of a data structure in a TT_SRPT2 shown in FIG. 6;
FIG. 8 is a schematic diagram showing the detail of a data structure in a VTS2 shown in FIG. 2;
FIG. 9 is a table showing one specific example of the construction of Titles related to the embodiment;
FIG. 10 is a schematic diagram showing the detail of a data structure in the TT_SRPT in the specific example shown in FIG. 9;
FIG. 11 is a schematic diagram showing the detail of a data structure in the TT_SRPT2 in the specific example shown in FIG. 9;
FIG. 12 is a schematic diagram showing a data structure (physical format) in a Video Object (VOB) related to the embodiment;
FIG. 13 is a schematic diagram showing a logical structure (logical format) in the optical disc related to the embodiment;
FIG. 14 is a block diagram in an embodiment of an information reproducing apparatus;
FIG. 15 is a flowchart showing a reproduction operation of the information reproducing apparatus related to the embodiment;
FIG. 16 is a flowchart showing a reproducing operation of another information reproducing apparatus related to the embodiment;
FIG. 17 is a table showing reproducible combinations on reproducing various discs by various players in the embodiment; and
FIG. 18A to FIG. 18C are schematic diagrams individually showing data structures in specific examples of various optical discs reproducible in the embodiment.

The embodiments of the present invention will be explained with reference to the drawings hereinafter.

### (Information Recording Medium)

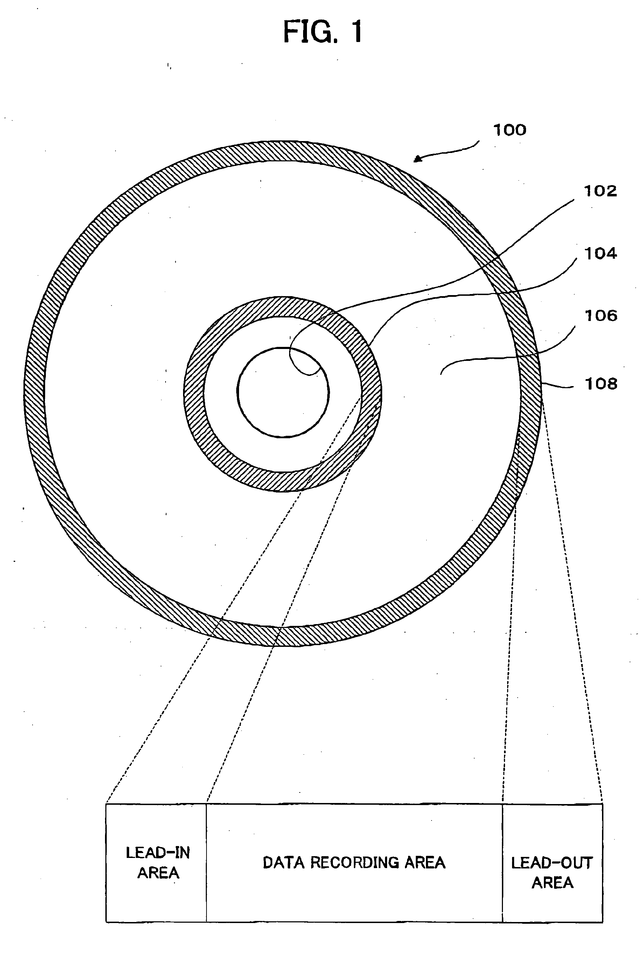

An embodiment of an information recording medium of the present invention will be explained with reference to FIG. 1 to FIG. 13. In this embodiment, the information recording medium of the present invention is applied to an optical disc of a reproducible type with a red laser.

Firstly, the basic structure of an optical disc in the embodiment will be explained with reference to FIG. 1. FIG. 1 shows the structure of the optical disc having a plurality of areas by using a substantial plan view on the upper part, as well as relating it to the area structure in its radial direction by using a schematic diagram on the lower part.

An optical disc 100 is a reproduce only disc. Alternatively, it is recordable (or writable) many times or only once in various recording methods, such as the magneto-optical method and the phase change method. The optical disc 100 has a recording surface on the disc main body with a diameter of about 12 cm, as is a DVD. On the recording surface, as shown in FIG. 1, the optical disc 100 is provided with: a lead-in area 104; a data area 106; and a lead-out area 108, in this order from the inner to the outer circumference, with a center hole 102 as the center. Groove tracks and land tracks are placed in each area alternately, and spirally or concentrically with the center hole 102 as the center, for example. The groove tracks may be wobbled. Alternatively or additionally, pre-pits may be formed on either one of or both groove and land tracks. Incidentally, the present invention is not specially limited to an optical disc having these three areas. For example, even if the lead-in area 104 and the lead-out area 108 do not exist, a file structure explained below can be constructed.

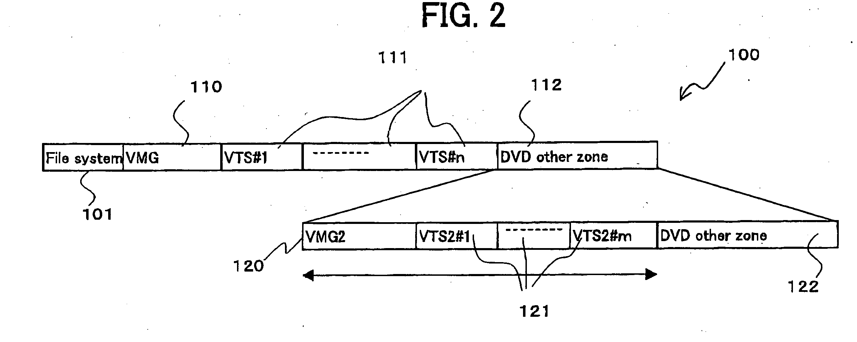

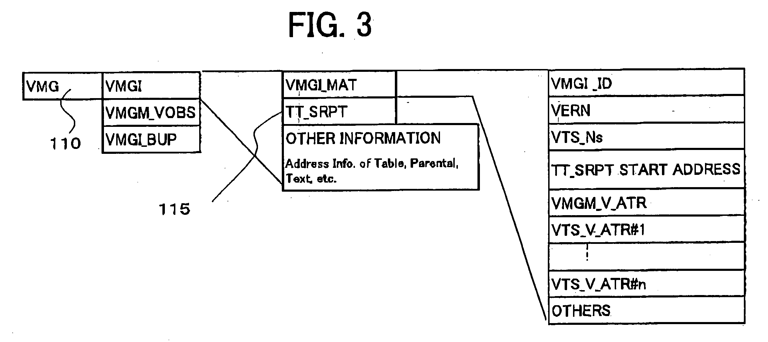

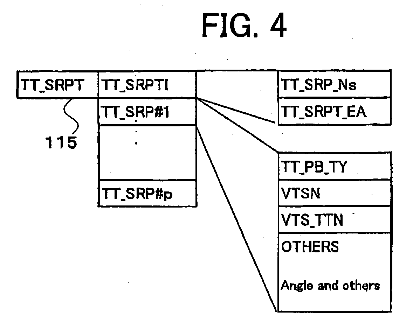

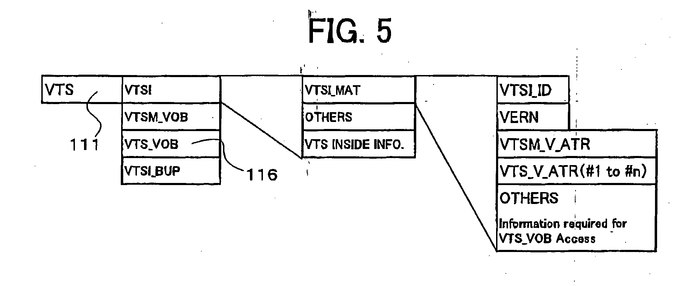

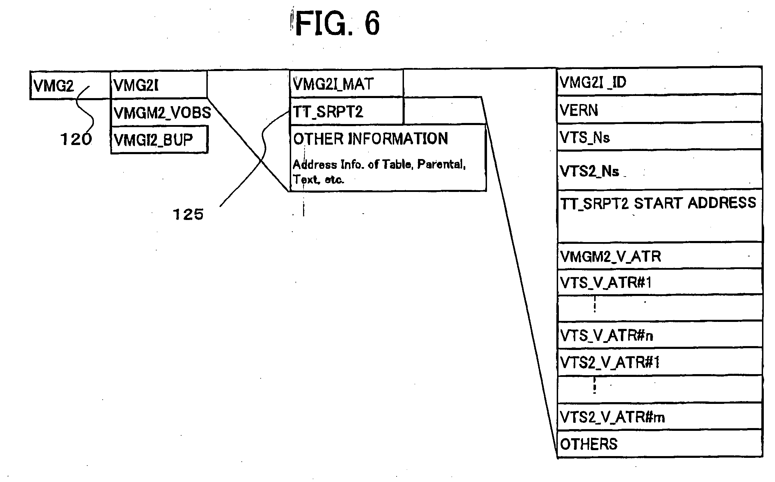

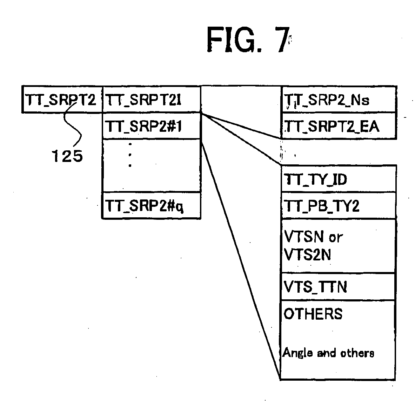

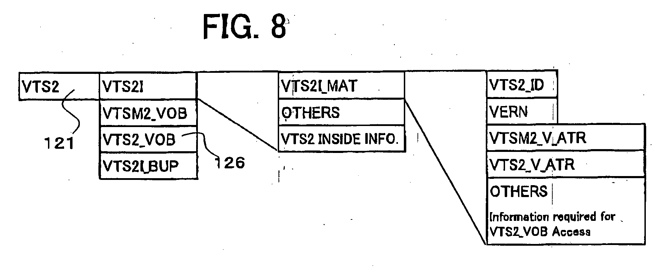

Next, a data structure recorded on the optical disc 100 will be explained with reference to FIG. 2 to FIG. 8. FIG. 2 is a schematic diagram showing a data structure recorded on the optical disc 100. FIG. 3 is a schematic diagram showing the detail of a data structure in a Video Manager (VMG) shown in FIG. 2. FIG. 4 is a schematic diagram showing the detail of a data structure in a Title Search Pointer Table (TT_SRPT) shown in FIG. 3. FIG. 5 is a schematic diagram showing the detail of a data structure in a Video Title Set (VTS) shown in FIG. 2. FIG. 6 is a schematic diagram showing the detail of a data structure in a VMG2 shown in FIG. 2. FIG. 7 is a schematic diagram showing the detail of a data structure in a TT_SRPT2 shown in FIG. 6. FIG. 8 is a schematic diagram showing the detail of a data structure in a VTS2 shown in FIG. 2.

As shown in the upper part of FIG. 2, the optical disc 100 is provided with: a file system 101; a "VMG" 110; a plurality of VTS(s) 111 (i.e. VTS#1, VTS#2, ..., VTS#n); and a DVD other zone 112, as a logical structure.

The file system 101 includes information (e.g. data, a data list, a data file, or a data table) for managing physical recording areas of various files recorded on the optical disc 100. The "VMG" 110 is one example of "the first management information" of the present invention and is information (e.g. data, a data list, a data file, or a data table) for managing and controlling each VTS#i (i = 1, 2, ..., n) 111. Each VTS#i 111 is one example of "the first entity information" of the present invention and is information (e.g. data, a data list, a data file, or a data table) compressed and encoded by MPEG 1 or MPEG 2.

Incidentally, in this embodiment, the VTS#i 111 is a set (or a group) of relating Titles (i.e. Titles which have the same numbers of audio information and sub picture information included therein, the same specification, the same attribute, such as a corresponding language, or the like).

In this embodiment, a first video zone having the same data structure as that of a conventional DVD Version 1.X (Ver1.X) is constructed on the optical disc 100 by the "VMG" 110 and the VTS#i 111. In this first video zone, contents information based on the SD standard is recorded as the VTS#i 111. This VTS#i 111 is managed and controlled by the "VMG" 110.

As shown in the lower part of FIG. 2, the optical disc 100 is further provided with: a "VMG2" 120; a plurality of "VTS2(s)" 121 (i.e. VTS2#1, VTS2#2, ..., VTS2#m); and a DVD other zone 122, in the DVD other zone 112.

The "VMG2" 120 is one example of "the second management information" of the present invention and is information (e.g. data, a data list, a data file, or a data table) for managing and controlling each VTS2#j (j = 1, 2, ..., m) 121. Each VTS2#j 121 is one example of "the second entity information" of the present invention and is information (e.g. data, a data list, a data file, or a data table) compressed and encoded by MPEG 4, which is a compressing and encoding method different from that in the first video zone.

Incidentally, in this embodiment, the VTS2#j 121 is a set (or a group) of relating Titles (i.e. Titles which have the same numbers of audio information and sub picture information included therein, the same specification, the same attribute, such as a corresponding language, or the like).

In this embodiment, a second video zone having a data structure of Version 2.0 (Ver2.0), which is a different data structure from that of a conventional DVD, is constructed on the optical disc 100 by the "VMG2" 120 and the VTS2#j 121. In this second video zone, contents information based on the HD standard or High Vision contents information, which is different from the information in the first video zone, and contents information based on the SD standard, which is the same as the information in the first video zone, is recorded as the VTS2#j 121. This VTS2#j 121 is managed and controlled by the "VMG2" 120.

This embodiment is particularly constructed, as explained below, such that the "VMG2" 120 manages and controls not only the VTS2#j 121 as being one example of the second entity information but also the VTS#i 111 as being one example of the first entity information. Namely, upon reproducing the optical disc 100, a DVD player compatible with Ver2.0 (e.g. a DVD player compatible with MPEG 4), which can reproduce the VTS2#j 121, enables the appropriate reproduction of not only the VTS2#j 121 but also the VTS#i 111, by referring to the "VMG2" 120 without any necessity to refer to the "VMG" 110. Moreover, upon reproducing the optical disc 100, a DVD player compatible with Ver1.X (e.g. a DVD player compatible with MPEG 2), which cannot reproduce the VTS2#j 121 but which can reproduce the VTS#i 111, enables the conventional appropriate reproduction of the VTS#i 111, by referring to the "VMG" 110 without reference to the VTS2#j 121 nor the "VMG2" 120.

As shown in FIG. 3, the "VMG" 110 shown in FIG. 2 includes: VMG Information (VMGI); VMG Menu Video Objects (VMGM_VOBS); and VMG Information BackUp (VMGI_BUP).

The "VMGI" is various logical information (e.g. a data, a data list, a data file, or a data table) about all of the "VMG" 110. The "VMGM_VOBS" is object information or entity information (e.g. a data, a data list, a data file, or a data table) including video information or the like for displaying a menuscreen, such as a disc menu, regarding all of the VTS#i 111 managed and controlled by the "VMG" 110. The "VMGI_BUP" is backup information of the VMGI (e.g. a data, a data list, a data file, or a data table) recorded in view of the importance of the VMGI. This VMGI_BUP can prevent from interfering with the reproduction of the VTS#i 111 even if the VMGI is destroyed.

As shown in FIG. 3, the "VMGI" has: a VMGI Management Table (VMGI_MAT); a Title Search Pointer Table (TT_SRPT) 115; and other information.

The "VMGI_MAT" is a table including various logical information tables about the "VMG" 110. More specifically, it includes, as shown in the right part of FIG. 3, VMGI Identification Information (VMGI_ID); a Version Number (VERN); VTS Numbers (VTS_Ns: the total number of VTS); a TT_SRPT Start Address; a VMGM Video Attribute (VMGM_V_ATR); VTS Video Attributes (VTS_V_ATR) #1 to #n; and other information.

The "VMGI_ID" is identification information of the VMGI. This is information for indicating to be "DVD Video VMG", i.e., the VMG for the DVD-Video. In other words, it is information for indicating to be an existing or old type of "VMG".

The "VERN" is information for indicating the version number of the VMG. More specifically, "Ver1.X" is written as the version number- of the VMG. This "Ver1.X" indicates that the VTS#i 111, which is managed by MPEG 2 by using the VMG, is compressed and encoded. Namely, this "Ver1.X" indicates that reproduction can be performed by decoding on the basis of the MPEG 2 upon reproducing.

The "VTS_Ns" is information for indicating the total number (n) of the VTS#i 111.

The "TT_SRPT Start Address" is information for indicating the start address of the TT_SRPT 115. Namely, it is information which enables the judgment of from which address the TT_SRPT 115 is written, even if the VMGI_MAT has a variable data length.

The "VMGM_V_ATR" is attribute information of video information constituting a VMG Menu. It indicates that this video information is compressed and encoded by MPEG 1 in the case of "00", and it indicates that this video information is compressed and encoded by MPEG 2 in the case of "01", for example.

The "VTS_V_ATR #1 to #n" are attribute information of video information constituting the VTS #1 to #n, respectively. It indicates that the video information is compressed and encoded by MPEG 1 in the case of "00", and it indicates that the video information is compressed and encoded by MPEG 2 in the case of "01", for example.

Incidentally, in FIG. 3, the "other information", which is included in the VMGI along with the VMGI_MAT and the TT_SRPT 115, is address information of tables, such as the VMGI_MAT and the TT_SRPT 115. Alternatively, it is Parental, text information, or the like. Incidentally, the "Parental" indicates contents with different reproducing scenes, depending on for adults and for children, even in a movie related to the same story or the like. Alternatively, it indicates the reproduction of the contents.

As shown in FIG. 4, the TT_SRPT 115 shown in FIG. 3 is a management information table for accessing each Title managed by the "VMG" 110. The TT_SRPT 115 includes: TT_SRPT Information (TT_SRPTI), which is various logical information about the TT_SRPT 115; and a Title Search Pointer (TT_SRP) #1, a TT_SRP#2, ..., and a TT_SRP#p, each of which is provided for the relative one of Titles.

The "TT_SRPTI", as shown in the right part of FIG. 4, includes: Title Search Pointer Numbers (TT_SRP_Ns), which is one example of total number information for indicating the total number of Titles managed by the "VMG" 110; and a Title Search Pointer Table End Address (TT_SRPT_EA), which is information for indicating the end address of the TT_SRPT 115.

The "TT_SRP#k (k = 1, ..., p)", as shown in the right part of FIG. 4, includes: a Title·Play Back·Type (TT_PB_TY), which is information for indicating the type of a Title of interest, such as a branch type"; a VTS Number (VTSN), which is information for indicating a VTS number of the VTS in which the Title of interest is stored; and a VTS Title Number (VTS_TTN), which is information for indicating the VTS Title number of the VTS in which the Title of interest is stored. The "TT_SRP#k (k = 1, ..., p)" further includes other information, which includes comprehensive information for Titles or the like, such as a corresponding VTS address, the number of Angles and the Parental of Titles.

Incidentally, a Title of a "branch type" branches in accordance with conditions and/or external instructions. For example, it is a Title for a game or for education, in which different contents are reproduced depending on whether an answer is right or wrong. The "Angle" indicates the reproduction of one scene with it displayed from mutually different viewpoints.

Next, as shown in FIG. 5, the VTS#i 111 includes: VTS Information (VTSI); a VTS Menu Video Object (VTSM_VOB); a VTS Video Object (VTS_VOB) 116; and VTS Information BackUp (VTSI_BUP), which is the backup file of the VTSI.

The "VTSI" includes: a VTSI Management Table (VTSI_MAT); other information; and VTS Inside information.

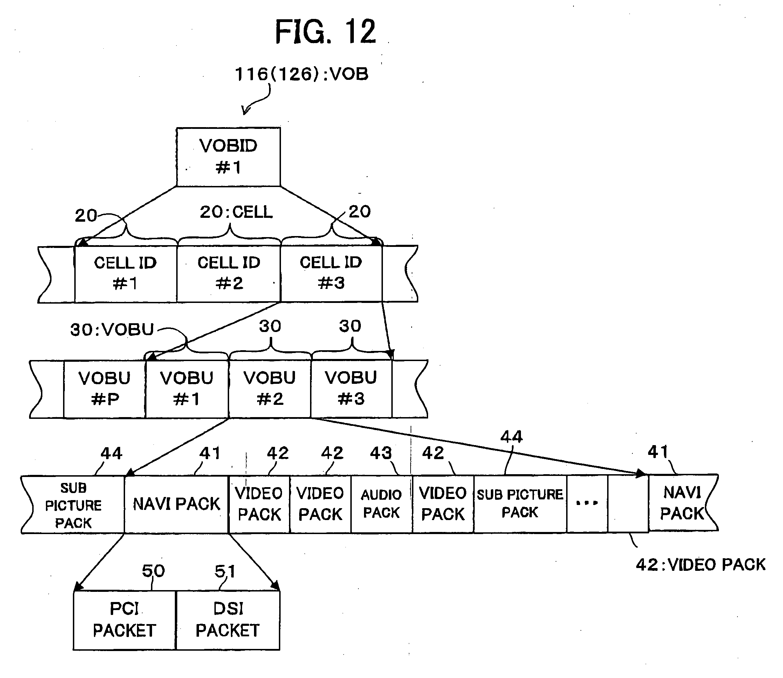

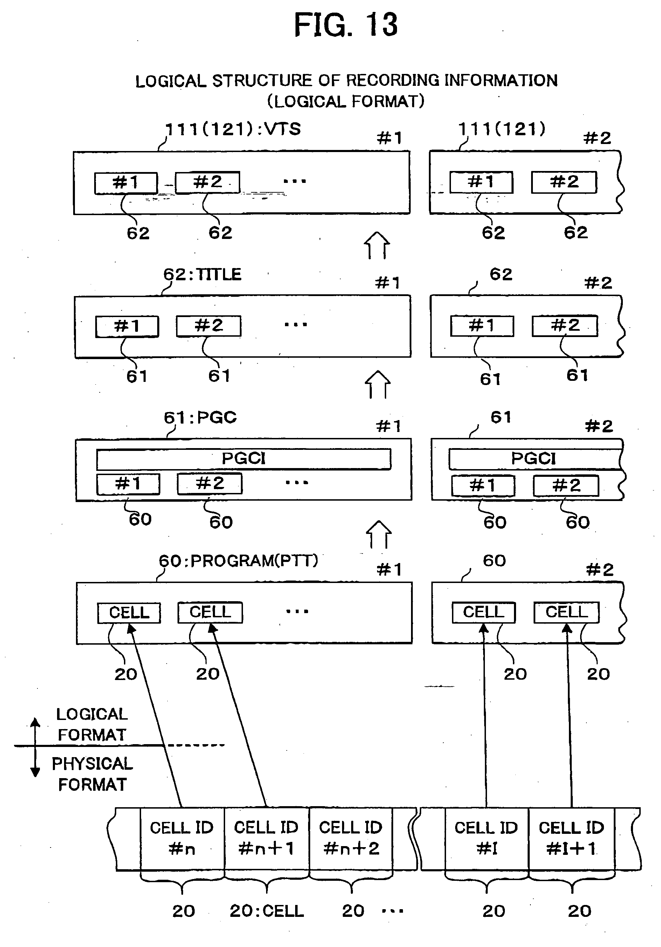

In such VTSI, Program Chain Information (PGCI), which is various information about a program chain, that is, logical divisions made by combining a plurality of cells (which will be described later), or similar information, is recorded as the VTS Inside information or as the other information. Moreover, in each VTS_VOB 116, an entity part of video information and audio information (i.e. a picture or sound itself except control information) is recorded in addition to various control information. The cells and the PGCI will be described later (refer to FIG. 12 and FIG. 13).

The "VTSI_MAT" is a table including: VTSI Identification Information (VTSI_ID); a Version Number (VERN); a VTSM Video Attribute (VTSM_V_ATR); a VTS Video Attribute (VTS_V_ATR); and other information.

The "VTSI_ID" is identification information of the VTSI. This is information for indicating to be "DVD Video VTS", i.e. the VTS for the DVD-Video. In other words, this is information for indicating to be an existing or old type of "VTS".

The "VERN" is information for indicating the version number of the VTS. More specifically, "Ver1.X" is written as the version number of the VTS. This "Ver1.X" indicates that the VTS#i 111, which is managed by MPEG 2 by using the VMG, is compressed and encoded. Namely, this "Ver1.X" indicates that reproduction can be performed by decoding on the basis of the MPEG 2 upon reproducing.

The "VTSM_V_ATR" is attribute information of video information constituting a VTS Menu. It indicates that this video information is compressed and encoded by MPEG 1 in the case of "00", and it indicates that this video information is compressed and encoded by MPEG 2 in the case of "01", for example.

The "VTS_V_ATR" is attribute information of video information constituting the VTS #i 111 (i.e. video information constituting one VTS). It indicates that the video information is compressed and encoded by MPEG 1 in the case of "00", and it indicates that the video information is compressed and encoded by MPEG 2 in the case of "01", for example.

Incidentally, the "other information" following the "VTS_V_ATR" in FIG. 5 is information necessary to access the VTS_VOB or the like, for example.

As shown in FIG. 6, the "VMG2" 120 shown in FIG. 2 includes: VMG2 Information (VMG2I); VMG Menu2 Video Objects (VMGM2_VOBS); and VMG Information 2 BackUp (VMGI2_BUP).

The "VMG2I" is various logical information (e.g. a data, a data list, a data file, or a data table) about all of the "VMG2" 120. The "VMGM2_VOBS" is object information or entity information (e.g. a data, a data list, a data file, or a data table) including video information or the like for displaying a menu screen, such as a disc menu, regarding all of the VTS2#j 121 (refer to FIG. 2) managed and controlled by the "VMG2" 120. Namely, this embodiment is constructed such that the reproduction of a disc menu or an entire menu about the whole optical disc 100 can be controlled even with the "VMG2" as being one example of the second management information. The "VMGI2_BUP" is backup information of the VMG2I (e.g. a data, a data list, a data file, or a data table) recorded in view of the importance of the VMG2I. This VMGI2_BUP can prevent from interfering with the reproduction of the VTS2#j 121 even if the VMG2I is destroyed.

As shown in FIG. 6, the "VMG2I" has: a VMG2I Management Table (VMG2I_MAT); a Title Search Pointer Table 2 (TT_SRPT2) 125; and other information.

The "VMG2I_MAT" is a table including various logical information tables about the "VMG2" 120. More specifically, it includes, as shown in the right part of FIG. 6, VMG2I Identification Information (VMG2I_ID); a Version Number (VERN); VTS Numbers (VTS_Ns: the total number of VTS); VTS2 Numbers (VTS2_Ns: the total number of VTS2); a TT_SRPT2 Start Address; a VMGM2 Video Attribute (VMGM2_V_ATR); VTS Video Attributes (VTS_V_ATR) #1 to #n; VTS2 Video Attributes (VTS2_V_ATR) #1 to #m; and other information.

The "VMG2I_ID" is identification information of the VMG2I. This is information for indicating to be "DVD Video VMG2", i.e. the VMG2 for the DVD-Video. In other words, this is information for indicating to be a novel or new type of "VMG2".

The "VERN" is information for indicating the version number of the "VMG2" 120. More specifically, "Ver2.0" is written as the version number of the VMG2. This "Ver2.0" indicates that the VTS2#j 121 (refer to FIG. 2), which is managed by MPEG 4 by using the "VMG2", is compressed and encoded. Namely, this "Ver2.0" indicates that reproduction can be performed by decoding on the basis of the MPEG 4 upon reproducing.

The "VTS_Ns" is information for indicating the total number (n) of the VTS#i 111. If there is no VTS#i 111 in the above-described first video zone on the optical disc 100, the total number "0" is written, which indicates that the VTS#i 111 does not exist.

The "VTS2_Ns" is information for indicating the total number (n) of the VTS2#j 121. Namely, it indicates how many VTS2 of the Ver2.0 exists.

The "TT_SRPT2 Start Address" is information for indicating the start address of the TT_SRPT2 125. Namely, it is information which enables the judgment of from which address the TT_SRPT2 125 is written, even if the VMG2I has a variable data length.

The "VMGM2_V_ATR" is attribute information of video information constituting a VMG Menu 2. It indicates that the video information is compressed and encoded by MPEG 4 in the case of "10", for example.

The "VTS_V_ATR #1 to #n" are attribute information of video information constituting the VTS #1 to #n, respectively. It indicates that the video information is compressed and encoded by MPEG 1 in the case of "00", and it indicates that the video information is compressed and encoded by MPEG 2 in the case of "01", for example.

The "VTS2_V_ATR #1 to #m" are attribute information of video information constituting the VTS #1 to #m, respectively. It indicates that the video information is compressed and encoded by MPEG 4 in the case of "10", for example.

Incidentally, in FIG. 6, the "other information", which is included in the VMG2I along with the VMG2I_MAT and the TT_SRPT2 125, is address information of tables, such as the VMG2I_MAT and the TT_SRPT2 125. Alternatively, it is Parental, text information, or the like.

As shown in FIG. 7, the "TT_SRPT2" 125 shown in FIG. 6 is a management information table for accessing each Title managed by the "VMG2" 120. The "TT_SRPT2" 125 includes: TT_SRPT2 Information (TT_SRPT2I), which is various logical information about the "TT_SRPT2" 125; and a Title Search Pointer 2 (TT_SRP2) #1, a TT_SRP2#2, ..., and a TT_SRP2#q, each of which is provided for the relative one of Titles.

The "TT_SRPT2I", as shown in the right part of FIG. 7, includes: "Title-Search Pointer 2"-Numbers (TT_SRP2_Ns), which is one example of total number information for indicating the total number of Titles managed by the "VMG2" 120; and a "Title-Search Pointer Table 2" End Address (TT_SRPT2_EA), which is information for indicating the end address of the "TT_SRPT2" 125.

In this embodiment, particularly, the "TT_SRP2_Ns" is information for indicating not only all of the Titles in the VTS2#j 121 but also the total number of the Titles in the VTS#i 111.

The "TT_SRP2#l (l = 1, ..., q)", as shown in the right part of FIG. 7, includes: a Title-Type Identification Information (TT_TY_ID) as being one example of "the identification information" of the present invention; a Title·Play Back·Type 2 (TT_PB_TY2), which is information for indicating the type of a Title of interest, such as a branch type; a "VTS Number" (VTSN) or "VTS2 Number" (VTSN2), which are information for indicating a VTS or VTS2 number of the VTS or VTS2 in which the Title of interest is stored; and a VTS Title Number (VTS_TTN), which is information for indicating the VTS or VTS2 Title number of the VTS or VTS2 in which the Title of interest is stored. The "TT_SRP2#l (l = 1, ..., q)" further includes other information, which includes comprehensive information for Titles or the like, such as a corresponding VTS or VTS2 address, the Parental of Titles, and the number of Angles.

The "TT_TY_ID" is identification information for indicating whether a Title specified by the TT_SRP2#l (l = 1, ..., q) is an old type of Title (i.e. Title Ver1.X, and so forth) or a new type of Title (i.e. Title Ver2.0, and so forth). Therefore, which of the VTSN and the VTSN2 is written in each TT_SRP2#l (l = 1, ..., q) is identified by referring to this TT_TY_ID, upon reproducing the optical disc 100. Alternatively, in addition to or in place of this identification, it is identified whether the VTS_TTN written in each TT_SRP2#l (l = 1, ..., q) indicates the VTS Title number or VTS2 Title number.

Next, as shown in FIG. 8, the VTS2#j 121 includes: "VTS2" Information (VTS2I); a "VTS Menu2" Video Object (VTSM2_VOB); a "VTS2" Video Object (VTS2_VOB) 126; and VTS2I BackUp (VTS2I_BUP), which is the backup file of the VTS2I.

The "VTS2I" includes: a VTS2I Management Table (VTS2I_MAT); other information; and VTS2 Inside information.

In such VTS2I, Program Chain Information (PGCI), which is various information about a program chain, that is, logical divisions made by combining a plurality of cells (which will be described later), or similar information, is recorded as the VTS2 Inside information or as the other information, as in the case of the VTSI. Moreover, in each VTS2_VOB 126, an entity part of video information and audio information is recorded in addition to various control information. The cells and the PGCI will be described later (refer to FIG. 12 and FIG. 13).

The "VTS2I_MAT" is a table including: VTS2I Identification Information (VTS2I_ID); a Version Number (VERN); a VTSM 2 Video Attribute (VTSM2_V_ATR); a VTS 2 Video Attribute (VTS2_V_ATR); and other information.

The "VTS2I_ID" is identification information of the VTS2I. This is information for indicating to be "DVD Video VTS2", i.e. the VTS2 for the DVD-Video. In other words, this is information for indicating to be a novel or new type of "VTS".

The "VERN" is information for indicating the version number of the "VTS2". More specifically, "Ver2.0" is written as the version number of the "VTS2". This "Ver2.0" indicates that the VTS#j 121, which is managed by MPEG 4 by using the "VMG2", is compressed and encoded. Namely, this "Ver2.0" indicates that reproduction can be performed by decoding on the basis of the MPEG 4 upon reproducing.

The "VTSM2_V_ATR" is attribute information of video information constituting a "VTS Menu 2". It indicates that the video information is compressed and encoded by MPEG 4 in the case of "10", for example.

The "VTS2_V_ATR" is attribute information of video information constituting the VTS2 #j 121 (i.e. video information constituting one VTS2). It indicates that the video information is compressed and encoded by MPEG 4 in the case of "10", for example.

Incidentally, the "other information" following the "VTS2_V_ATR" in FIG. 8 is information necessary to access the VTS2_VOB or the like, for example.

As shown in FIG. 1 to FIG. 8, a new type of Title is stored in the VTS2#j 121 and an old type of Title is stored in the VTS#i 111 in this embodiment. This does not cause any duplicating or overwriting of data and enables effective data storage. Moreover, the "VMG2" 120 is management information for managing and controlling not only the VTS2 #j 121 but also the VTS#i 111. Therefore, referring to this "VMG2" 120 causes efficient reproduction control of the old type of and new type of Titles, upon reproducing the optical disc 100.

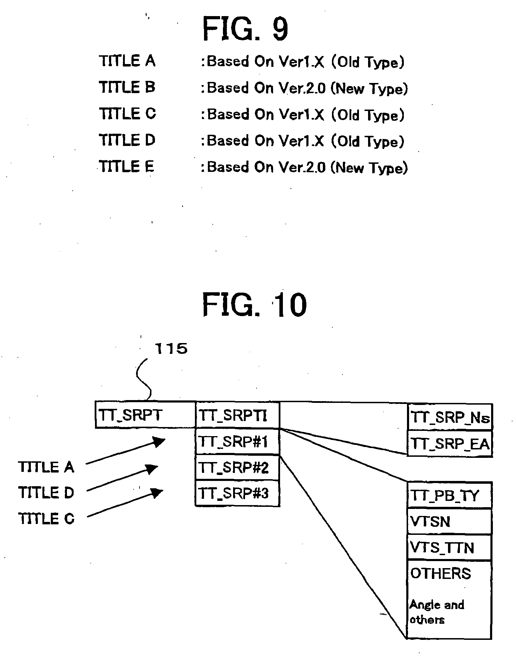

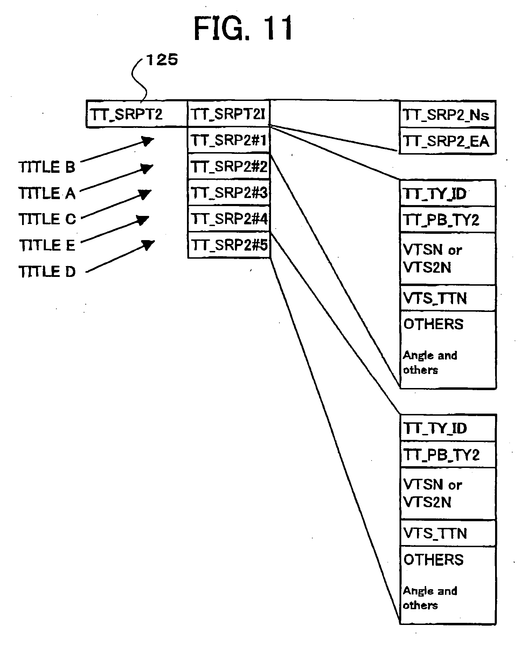

Next, with reference to FIG. 9 to FIG. 11, specific examples of the structures of a plurality of Titles recorded on the optical disc 100 will be explained. FIG. 9 is a table showing one specific example of the construction of Titles. FIG. 10 is a schematic diagram showing the detail of a data structure in the TT_SRPT in the specific example shown in FIG. 9. FIG. 11 is a schematic diagram showing the detail of a data structure in the TT_SRPT 2 in the specific example shown in FIG. 9.

Suppose five Titles A to E are recorded on the optical disc 100, as shown in FIG. 9. The Titles A, C, and D are old types of Titles Ver1.X. Namely, each of them is constructed of video information compressed and encoded by MPEG 2, for example. On the other hand, the Titles B and E are new types of Titles Ver2.0. Namely, each of them is constructed of video information compressed and encoded by MPEG 4, for example.

As shown in FIG. 10, the old type of Titles A, C, and D, which are recorded as the VTS#i 111, are managed and controlled by the VMG 110 as being one example of the first management information, which was explained with reference to FIG. 2 to FIG. 5. More specifically, the Title A is managed and controlled by the VMG 110 on the TT_SRPT 115 as the address or the like thereof is specified by the TT_SRP#1. The Title D is managed and controlled by the VMG 110 as the address or the like thereof is specified by the TT_SRP#2. The Title C is managed and controlled by the VMG 110 as the address or the like thereof is specified by the TT_SRP#3.

In this case, information for indicating that the total number = 3 is written in the TT_SRP_Ns in the right part of FIG. 10. In the TT_SRP#1 for specifying the Title A, as illustrated in FIG. 10, e.g. the VTS#2 is written in the VTSN as the VTS number, and e.g. VTS#2_TTN#1 is written in the VTS_TTN as the VTS Title number.

On the other hand, as shown in FIG. 11, the old type of Titles A, C, and D, which are recorded as the VTS#i 111, and the new type of Titles B and E, which are recorded as the VTS2#j 121, are managed and controlled by the "VMG2" 120 as being one example of the second management information, which was explained with reference to FIG. 2, and FIG. 6 to FIG. 8. More specifically, the new type of Title B is managed and controlled by the "VMG2" 120 on the "TT_SRPT2" 125 as the address or the like thereof is specified by the TT_SRP2#1. The old type of Title A is managed and controlled by the "VMG2" 120 as the address or the like thereof is specified by the TT_SRP2#2. The old type of Title C is managed and controlled by the "VMG2" 120 as the address or the like thereof is specified by the TT_SRP2#3. The new type of Title E is managed and controlled by the "VMG2" 120 as the address or the like thereof is specified by the TT_SRP2#4. The old type of Title D is managed and controlled by the "VMG2" 120 as the address or the like thereof is specified by the TT_SRP2#5.

In this case, information for indicating that the total number = 5 is written in the TT_SRP2_Ns in the right part of FIG. 11. In the TT_SRP2#1 for indicating the Title B, as illustrated in FIG. 11, e.g. "00100000b" is written in the TT_TY_ID, because it is a new type of Title. For example, the VTS2#1 is written as the VTS2 number in the VTSN or VTSN2, and e.g. VTS#1_TTN#1 is written as the VTS2 Title number in the VTS_TTN. In the other information following this VTS_TTN, the address of the VTS2#1, the Parental and the number of Angles in the new type of Title and the like are written, for example. Moreover, in the TT_SRP2#5 for indicating the Title D, as illustrated in FIG. 11, e.g. "00010000b" is written in the TT_TY_ID, because it is an old type of Title. For example, the VTS#2 is written in the VTSN or VTSN2 as the VTS2 number, and e.g. VTS#2_TTN#2 is written as the VTS2 Title number in the VTS_TTN. In the other information following this VTS_TTN, the address of the VTS#2, the Parental and the number of Angles in the old type of Title and the like are written, for example.

Next, a physical format of the above-described VOB (i.e. the VTS_VOB 116 shown in FIG. 5 or the VTS2_VOB 126 shown in FIG. 8) will be explained with the "cell" with reference to FIG. 12. FIG. 12 is a schematic diagram showing a data structure (physical format) in the VOB related to the embodiment.

As shown in FIG. 12, each VOB has its own ID number (VOBID#1, #2, ...). Each VOB is constructed of a plurality of cells 20, each of which has its own ID number. One of the cells 20 is constructed of a plurality of VOB Units (VOBU) 30, each of which has its own ID number. The VOBU 30 includes any one of video information, audio information, and sub-picture information (which is information about sub-pictures, such as subtitles in a movie). Alternatively, it may include only a Navi Pack. Also, the VOBU 30 is one information unit accessible by using an information reproducing apparatus. One VOBU 30 includes: a Navi Pack 41, which stores therein control information whose control object is the video information or the like included in the VOBU 30; a Video Pack 42 including video data as the video information; an Audio Pack 43 including audio data as the audio information; and a Sub Picture Pack 44 including sub picture data as the sub picture information. In a pack header recorded at the head of each Pack, there is recorded information about a reading start time point, which is referred to as System Clock Reference (SCR), for indicating a reading start time point on a reproduction time axis, at which data included in each Pack is supposed to be read out from a track buffer on a reproducing apparatus described below and also to be inputted to each buffer. Also, a start code for indicating the start of the Pack, or the like are recorded in the pack header. The Navi Pack 41 includes: Data Search Information (DSI) data 51, which is search information for searching for pictures or sound desired to be reproduced and displayed; and Presentation Control Information (PCI) data 50, which is information about reproduction and display control upon reproducing and displaying the pictures or sound searched for on the basis of the DSI data 51.

In this embodiment, the Video Pack 42 includes one or a plurality of Group of Pictures (GOP) in the case of the old type of VTS_VOB 116, for example. The above-described GOP is the smallest image unit which is based on MPEG 2 and which can be reproduced alone. On the other hand, the Video Pack 42 includes a picture unit or units based on MPEG 4 in the case of the new type of VTS2_VOB 126, for example.

Next, a logical format (logical structure) of the optical disc 100 will be explained with the "PGCI" with reference to FIG. 13. FIG. 13 is a schematic diagram showing a logical structure (logical format) in the optical disc related to the embodiment.

For convenience, the explanation will start from the lowest hierarchy in FIG. 13. One program 60 is logically constructed by selecting and combining a plurality of cells 20 out of the above-described physical structure (refer to FIG. 12). Incidentally, an author or producer can define one program 60 or a combination of a plurality of the programs 60 as the smallest unit that an audience can freely select and watch or listen to. This unit is referred to as Part of Title (PTT). One Program Chain (PGC) 61 is logically constructed by combining a plurality of programs 60. The above-described PGCI is defined with this PGC 61 unit. The PGCI includes: a reproduction order of the cells 20 in each program 60 upon reproducing each program 60; an address of each cell 20, which is a recording position on the optical disc 100; a head cell number of a head cell 20 to be reproduced in one program 60; and so on. One PGC 61 includes data, such as substantive pictures and sound, as a combination of the programs 60 (which is, in other words, a combination of the cells 20) in addition to the above-described PGCI. One Title 62 is logically constructed by combining one or a plurality of PGC 61.

In this embodiment, one VTS#i 111 is logically constructed by one or a plurality of Titles 62 constructed in the above manner if they are old type of Titles, On the other hand, if they are new type of Titles, one VTS2#j 121 is logically constructed.

### (Embodiment of Information Reproducing Apparatus)

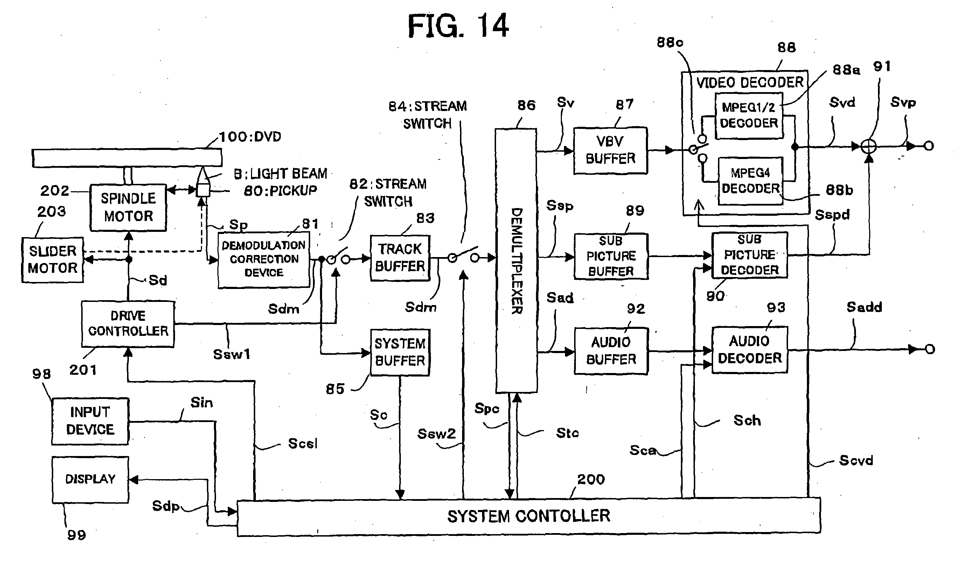

Next, an embodiment of an information reproducing apparatus of the present invention will be explained with reference to FIG. 14 to FIG. 18.

Firstly, the structure and operation of the information reproducing apparatus will be explained with reference to FIG. 14. FIG. 14 is a block diagram in the embodiment of the information reproducing apparatus. In this embodiment, the information reproducing apparatus is constructed as a DVD player.

In FIG. 14, the information reproducing apparatus is provided with: an optical pickup 80; a demodulation correction device 81; stream switches 82 and 84; a track buffer 83; a system buffer 85; a demultiplexer 86; a Video Buffer Verifier (VBV) buffer 87; a video decoder 88; a sub picture buffer 89; a sub picture decoder 90; a mixer 91; an audio buffer 92; an audio decoder 93; an input device 98; a display 99; a system controller 200; a drive controller 201; a spindle motor 202; and a slider motor 203.

In this embodiment, the video decoder 88 is particularly provided with: a MPEG 1/2 decoder 88a; a MPEG 4 decoder 88b; and a select switch 88c for selecting the input of a video signal Sc to the both decoders. The select switch 88c is select-controlled in response to a control signal Scvd generated and outputted by the system controller 200.

Incidentally, the structure shown in FIG. 14 is only a part regarding the reproduction of pictures and sound out of the structure of the information reproducing apparatus constructed as the video DVD player. A servo circuit or the like for servo-controlling the pickup 80, the spindle motor 202, the slider motor 203, or the like is the same as that in the related art, so that the description and detailed explanation thereof are omitted.

Next, the detailed structure of each constitutional element of the information reproducing apparatus in the embodiment and the basic operation thereof in the embodiment will be explained with reference to FIG. 14.

The pickup 80 includes a laser diode, a beam splitter, an object lens, a photodetector, and so on, which are not illustrated. The pickup 80 irradiates a light beam B as reproduction light onto the optical disc 100 and receives reflected light of the light beam B from the optical disc 100. Then, it outputs a detected signal Sp corresponding to the information pits formed on the optical disc 100. In this case, tracking servo control and focus servo control are performed by the same manner as that in the related art with respect to the not-illustrated object lens so that the light beam B is irradiated accurately onto information tracks on the optical disc 100 and that it is accurately focused on the information recording surface on the optical disc 100.

The detected signal Sp outputted from the pickup 80 is inputted to the demodulation correction device 81. Then, demodulation and error correction are performed to generate a demodulated signal Sdm. The demodulated signal Sdm is outputted to the stream switch 82 and the system buffer 85.

The stream switch 82 to which the demodulated signal Sdm is inputted is controlled regarding its opening and closing by a switch signal Ssw1 from the drive controller 201. In closing, the stream switch 82 lets the inputted demodulated signal Sdm go through as it is and outputs it to the track buffer 83. In contrast to this, in opening of the stream switch 82, it does not output the demodulated signal Sdm, so that unnecessary information (signal) is not inputted to the track buffer 83.

The track buffer 83 to which the demodulated signal Sdm is inputted is constructed of a First In First Out (FIFO) memory or the like. The track buffer 83 memorizes the inputted demodulated signal Sdm temporarily, and it outputs the memorized demodulated signal Sdm continuously when the stream switch 84 is closed.

The stream switch 84 to which the demodulated signal Sdm is inputted continuously is controlled regarding its opening and closing by a switch signal Ssw2 from the system controller 200 so that various buffers described later do not overflow in separation processing at the demultiplexer 86, or adversely that they do not stop decode processing because of its emptiness.

On the other hand, the system buffer 85 to which the demodulated signal Sdm is inputted, in addition to the track buffer 83, accumulates management information about all of the information recorded on the optical disc 100 or the like (i.e. the VMG, the VMG2, or the like), which is firstly detected when the optical disc 100 is loaded. Then, it outputs the accumulated management information as control information Sc to the system controller 200. The system buffer 85 also accumulates the DSI data 51 for each Navi Pack 41 temporarily during reproduction and outputs it as control information Sc to the system controller 200.

The demultiplexer 86 to which the demodulated signal Sdm is inputted continuously through the stream switch 84 extracts the video data, the sub picture data, and the audio data for the relative Packs, and it extracts the PCI data for the Navi Pack. Then, the demultiplexer 86 outputs them as a video signal Sv, a sub picture signal Ssp, an audio signal Sad, and a PCI signal Spc to the VBV buffer 87, the sub picture buffer 89, the audio buffer 92, and the system controller 200, respectively.

The VBV buffer 87 to which the video signal Sv is inputted is constructed of the FIFO memory or the like. It accumulates the video signal Sv temporarily and outputs it to the video decoder 88. The VBV buffer 87 is intended to compensate variation in the amount of data for each picture in the video signal Sc, which is compressed by e.g. the MPEG 2 method or the like. The video signal Sv in which the variation in the amount of data is compensated is inputted to the video decoder 88.

In this embodiment, particularly when the old type of Titles are reproduced, the select switch 88c is switched by the control signal Scvd under the control of the system controller 200 based on the above-described attribute information, and the MPEG 1/2 decoder 88a is used. Then, the decoding of the video signal Sv based on MPEG 1 or MPEG 2 is performed appropriately, and it is outputted as a decoded video signal Svd to the mixer 91. On the other hand, when the new type of Titles are reproduced, the select switch 88c is switched by the control signal Scvd under the control of the system controller 200 based on the above-described attribute information, and the MPEG 4 decoder 88b is used. Then, the decoding of the video signal Sv based on MPEG 4 is performed appropriately, and it is outputted as a decoded video signal Svd to the mixer 91.

In the meanwhile, the sub picture buffer 89 to which the sub picture signal Ssp is inputted accumulates the inputted sub picture signal Ssp temporarily and outputs it to the sub picture decoder 90. The sub picture buffer 89 is intended to synchronize the sub picture data in the Sub Picture Pack 44 included in the sub picture signal Ssp with the video data in the Video Pack 42 corresponding to the sub picture data and to output it. Then, the sub picture signal Ssp synchronized with the video data is inputted to the sub picture decoder 90. Here, decoding is performed on the basis of a control signal Sch outputted from the system controller 200, and it is outputted as a decoded sub picture signal Sspd to the mixer 91.

The decoded video signal Svd outputted from the video decoder 88 and the decoded sub picture signal Sspd outputted from the sub picture decoder 90 (which is synchronized with the corresponding decoded video signal Svd) are mixed by the mixer 91. The mixed signal is outputted to a display device, such as a Cathode Ray Tube (CRT), a Liquid Crystal Display (LCD), and a Plasma Display (PDP), as a final picture signal Svp to be displayed.

The audio buffer 92 to which the audio signal Sad is inputted is constructed of the FIFO memory or the like. The audio buffer 92 accumulates the inputted audio signal Sad temporarily and outputs it to the audio decoder 93. The audio buffer 92 is intended to synchronize the audio signal Sad with the video signal Sv or sub picture signal Ssp including corresponding video information and to output it. The audio buffer 92 delays the audio signal Sad depending on an output state of the corresponding video information. The audio signal Sad, which is time-adjusted so as to synchronize it with the corresponding video information, is outputted to the audio decoder 93. Then, it is reproduced in a linear Pulse Code Modulation (PCM) method on the basis of a control signal Sca outputted from the system controller 200. Then, it is outputted to a not-illustrated speaker or the like, as a demodulated audio signal Sadd.

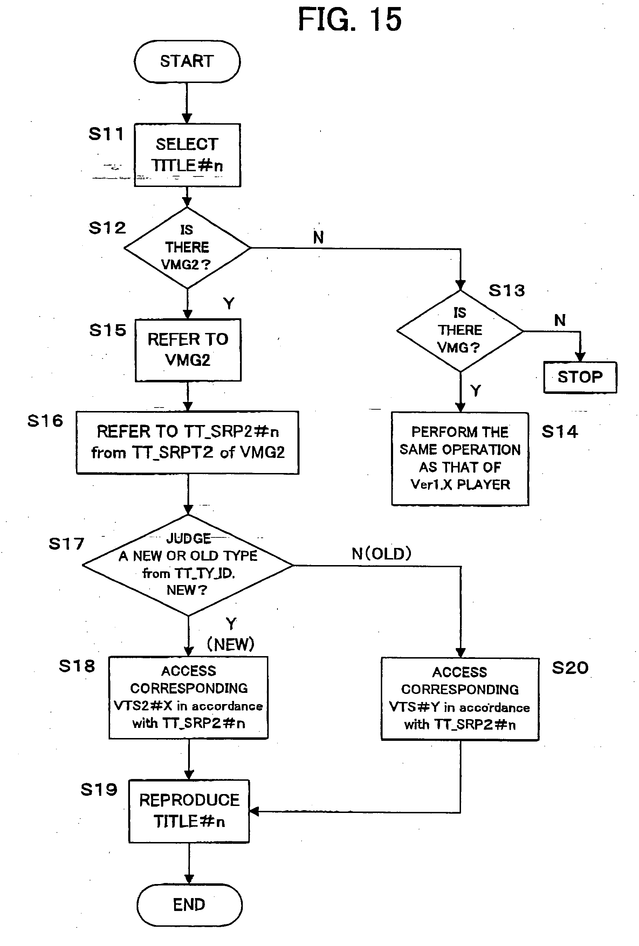

Next, a reproduction sub routine in reproducing the optical disc 100 by the information reproducing apparatus (refer to FIG. 14) which can reproduce both the new type of Ver2.0 Titles and the old type of Ver1.X Titles will be explained with reference to FIG. 15. FIG. 15 is a flowchart showing the reproduction operation. Incidentally, this type of operation control in this embodiment is performed mainly by the system controller 200.

In FIG. 15, as an initial condition, suppose that a user has looked at a disc jacket of an optical disc which the user will reproduce and that the user has already known what title number the user wants to listen to. Hereinafter, operations related to the reproduction sub routine after the user sets the disc on the information reproducing apparatus and operates a title selection key will be explained.

Firstly, when a Title#n is selected by the input device 98 (step S1), it is judged whether or not any VMG2 is recorded on the optical disc 100 (step S12). Namely, it is judged whether or not this disc is an optical disc on which a new type of Title is recorded. If the VMG2 is not recorded (the step S12: No), it is judged whether or not any VMG is recorded on the optical disc 100 (step S13). Namely, it is judged whether or not this disc is an optical disc on which a new type of Title is not recorded but an old type of Title is recorded. If the VMG is not recorded (the step S13: No), the reproduction of the optical disc 100 is impossible, so that a series of processing is stopped. In this case, predetermined stop processing is performed; e.g. picture or audio output of a message of reproduction inability or the like. Incidentally, with respect to the judgment of the VMG and the VMG2, they are judged by checking whether or not a file name indicating their presence is recorded in the file system 101 or by examining disc physical information in the lead in area, which is recorded on the inner circumference side of the file system 101, or the like.

On the other hand, if the VMG is recorded as a result of the step S13 (the step S13: Yes), a reproduction operation which is the same as that of a conventional DVD player based on Ver1.X is performed in accordance with the recorded VMG as shown in FIG. 3, for example. Namely, on the basis of the VMG as being one example of the first management information, the VTS as being one example of the first entity information is reproduced (step S14).

On the other hand, if the VMG2 is recorded as a result of the judgment in the step S12 (the step S12: Yes), the recorded VMG as shown in FIG. 6 is referred (step S15). Moreover, a "TT_SRP2#n" related to the Title#n selected in the step S11 is referred from the "TT_SRPT2" in the VMG2 as shown in FIG. 7 (step S16).

Then, on the basis of the "TT_TY_ID" in the "TT_SRPT#n" as shown in FIG. 7, it is judged whether the Title#n is a new type or old type; namely, the judgment of a new or old type is performed (step S17).

If it is a new type of Title (the step S17: Y), a VTS2#X corresponding to the new type of Title#n is accessed in accordance with the "TT_SRPT2#n" (step S18). Then, the new type of Title#n is reproduced (step S19). On the other hand, if it is an old type of Title (the step S17: N), a VTS#Y corresponding to the old type of Title#n is accessed in accordance with the "TT_SRPT2#n" (step S20). Then, the old type of Title#n is reproduced (the step S19). A series of reproduction processing ends after the reproduction of the new or old type of Title.

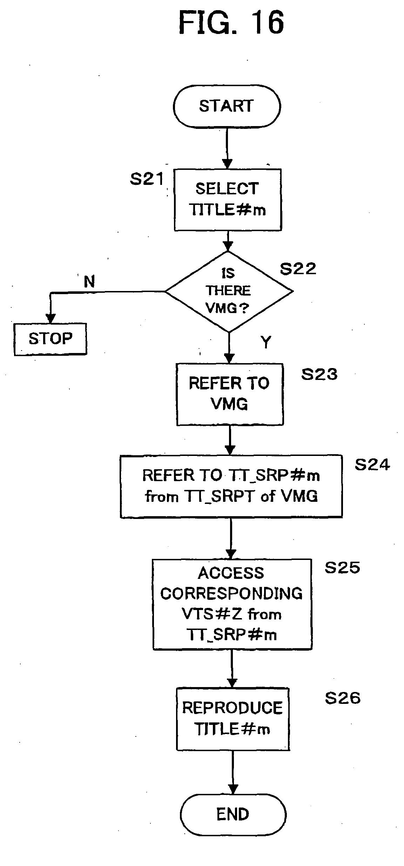

Next, a reproduction sub routine in reproducing the optical disc 100 by an information reproducing apparatus which cannot reproduce the new type of Ver2.0 Title but which can reproduce the old type of Ver1.X Title will be explained with reference to FIG. 16. FIG. 16 is a flowchart showing the reproduction operation.

This type of information reproducing apparatus is constructed such that the video decoder 88 does not have the MPEG 4 decoder 88b but has the MPEG 1/2 decoder 88a, in the structure of the apparatus shown in FIG. 14. In this case, it is not necessary to have the select switch 88c nor the generation and output of the control signal Scvd by the system controller 200.

In FIG. 16, as an initial condition, suppose that the recognition of the optical disc 100 loaded into the information reproducing apparatus and the recognition of a volume structure or a file structure by the file system 101 (refer to FIG. 2) have been already completed. It is also assumed that a menu screen, such as a disc menu and a title menu, which uses the VMG or VTS, is displayed. It is particularly assumed that the menu screen on which a user can select the old type of Title is displayed on a display. Hereinafter, operations related to the reproduction sub routine after this menu screen receives thereon the selection of a Title desired by the user will be explained.

Firstly, a Title#m is selected by the input device 98 (step S21), Then, it is judged whether or not any VMG is recorded on the optical disc 100 (step S22). Namely, it is judged whether or not this is an optical disc on which an old type of Title is recorded. If the VMG is not recorded (the step S22: No), the reproduction of the optical disc 100 is impossible, so that a series of processing is stopped. In this case, predetermined stop processing is performed; e.g. picture or audio output of a message of reproduction inability or the like.

On the other hand, if the VMG is recorded as a result of the judgment in the step S22 (the step S22: Yes), the recorded VMG as shown in FIG. 3 is referred (step S23). Moreover, a "TT_SRP#m" related to the Title#m selected in the step S21 is referred from the "TT_SRPT" in the VMG as shown in FIG. 4 (step S24).

Then, a VTS#Z corresponding to the old type of Title#m is accessed in accordance with the "TT_SRP#m" (step S25). Then, the old type of Title#m is reproduced (step S26). A series of reproduction processing ends after the reproduction of the old type of Title.

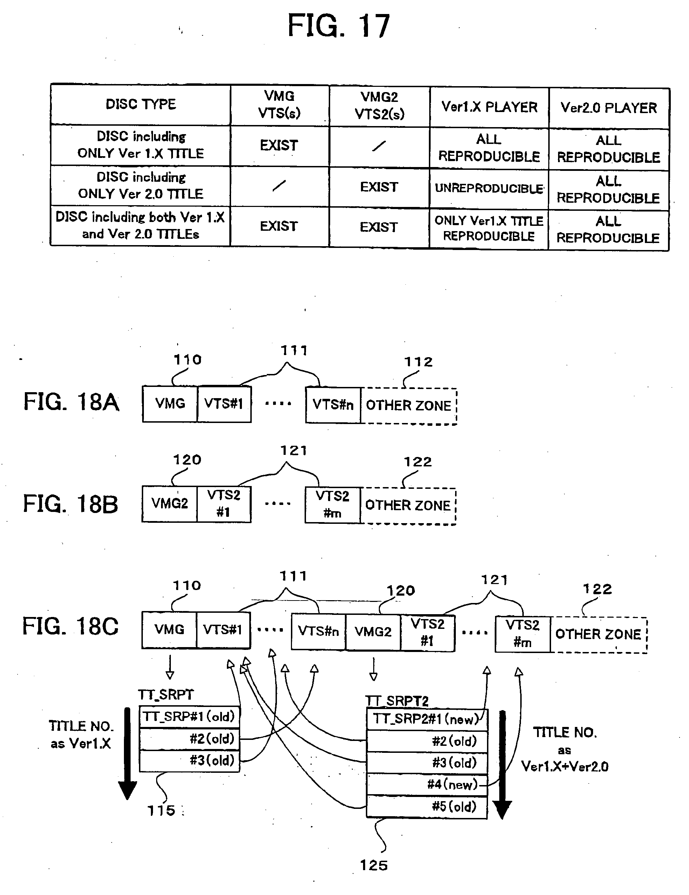

Next, with reference to FIG. 17 and FIG. 18A to FIG.18C, a relationship between Various optical discs on which the old and new types of Titles in this embodiment and various information reproducing apparatus will be explained. FIG. 17 is a table showing reproducible combinations upon reproducing various discs by various players in the embodiment. FIG. 18A to FIG. 18C are schematic diagrams individually showing data structures in specific examples of various optical discs reproducible in the embodiment.

As shown at the top of the table in FIG. 17, an optical disc on which only the old type of Titles based on Ver1.X are recorded has the VMG and the VTS(s). It does not have the VMG2 nor the VTS2(s). More specifically, the optical disc of this type has a data structure shown in FIG. 18A. Namely, it is provided with: the VMG 110 as being one example of the management information; the VTS#i 111 as being one example of the entity information; and the other zone 112. Therefore, all Titles can be reproduced by an existing DVD player based on Ver1.X in accordance with the reproduction operation shown in FIG. 16. Moreover, all Titles can be reproduced even by the information reproducing apparatus shown in FIG. 14, which is one example of a DVD player based on Ver 2.0, in accordance with the reproduction operation shown in FIG. 15.

As shown in the middle of the table in FIG. 17, an optical disc on which the new type of Titles based on Ver2.0 are recorded does not have the VMG nor the VTS(s). It has the VMG2 and the VTS2(s). More specifically, the optical disc of this type has a data structure shown in FIG. 18B. Namely, it is provided with: the "VMG2" 120 as being one example of the management information; the VTS2#j 121 as being one example of the entity information; and the other zone 122. Therefore, any Titles cannot be reproduced by the existing DVD player based on Ver1.X in accordance with the reproduction operation shown in FIG. 16. On the other hand, all Titles can be reproduced by the information reproducing apparatus shown in FIG. 14, which is one example of the DVD player based on Ver 2.0, in accordance with the reproduction operation shown in FIG. 15.

As shown in the bottom of the table in FIG. 17, an optical disc on which both the old type of Titles based on Ver1.X and the new type of Titles based on Ver2.0 are recorded has the VMG, the VTS(s), the VMG2, and the VMG2(s). More specifically, the optical disc of this type has a data structure shown in FIG. 18C. Namely, it is provided with: the "VMG" 110 as being one example of the first management information; the VTS#i 111 as being one example of the first entity information; the "VMG2" 120 as being one example of the second management information; the VTS2#j 121 as being one example of the second entity information; and the other zone 122. Therefore, the old type of Titles based on Ver1.X can be reproduced, but the new type of Titles based on Ver2.0 cannot be reproduced by the existing DVD player based on Ver1.X, in accordance with the reproduction operation shown in FIG. 16. On the other hand, any Titles can be reproduced, regardless of the new or old type, by the information reproducing apparatus shown in FIG. 14, which is one example of the DVD player based on Ver 2.0, in accordance with the reproduction operation shown in FIG. 15. Incidentally, FIG. 18C shows, by using thin arrows, that each VTS#i 111 is specified by the "TT_SRPT" 115 upon reproducing the old type of Titles and that each VTS#i 111 or each VTS#j 121 is specified by the "TT_SRPT2" 125 upon reproducing the old or new type of Titles. Moreover, the order of title numbers in the "TT_SRPT" 115 and the "TT_SRPT2" 125 is individually shown with thick downward arrows.

As explained with reference to FIG. 14 to FIG.18C, according to the optical disc in this embodiment, it can be reproduced even by an information reproducing apparatus for the conventional compressing and encoding method, e.g. MPEG2 or the like (i.e. the existing DVD player based on Ver1.X), in accordance with the reproduction operation shown in FIG. 16. Especially in this case, even if the VMG2 as being one example of the second management information and the VTS2#j 121 as being one example of the second entity information are recorded, they are automatically neglected. Moreover, according to the optical disc in this embodiment, it can be reproduced even by an information reproducing apparatus for a more advanced, highly efficient compressing and encoding method, e.g. MPEG 4 or the like (i.e. the compatible DVD player compatible with Ver1.X and Ver2.0 shown in FIG. 14), in accordance with the reproduction operation shown in FIG. 15. In this case, especially if the VMG2 as being one example of the second management information is recorded, not only the VTS2 as being one example of the second entity information but also the VTS as being one example of the first entity information can be reproduced by referring to the VMG2 as being one example of the second management information without reference to the VMG as being one example of the first management information.

On the optical disc 100 shown in FIG. 1 to FIG. 13, there are recorded even the VTS as being one example of the first entity information and the VMG as being one example of the first management information, but they may not be recorded. For example, as one modified example, an optical disc may have the data structure shown in FIG. 18B. Namely, if the VTS2 as being one example of the second entity information and the VMG2 as being one example of the second management information are recorded, a reasonable effect can be obtained. Even on such an optical disc, the VTS2 can be reproduced without any problems by referring to the VMG2 by the information reproducing apparatus shown in FIG. 14 as described above. In addition, even if the information reproducing apparatus shown in FIG. 14 is constructed such that the video decoder 88 does not have the MPEG 1/2 88a but has the MPEG 4 decoder 88b, this type of optical disc having only the VMG2 and the VTS2 can be reproduced without any problems. When an optical disc in the modified example is reproduced, it can be quickly identified that the SD standard Titles or the like are not recorded, by referring to the VTSN indicative of the total number of the old type of Titles in the VMG2, from such information that "the total number = 0", fox example. After it is identified that the SD standard Titles are not recorded, the new type of Titles, such as the HD standard Titles, can be reproduced appropriately. Even in this case, the VTS2#j 121 can be reproduced extremely efficiently by referring to the "VMG2" 120 by the compatible information reproducing apparatus shown in FIG. 14 or by the information reproducing apparatus only for MPEG 4.

Incidentally, in the above-described embodiment, the optical disc 100 is explained as one example of the information recording medium, and a player related to the optical disc 100 is explained as the one example of the information reproducing apparatus. The present invention, however, is not limited to the optical disc 100 and the player. It can be applied to various information recording media for high-density recording or high transfer rate, and to the player for the media.

## Claims

1. An information recording medium **characterized in that**, on said information recording medium, there are recorded:
one or a plurality of first entity information (111), which is compressed and encoded by a first compressing and encoding method, for individually constituting Titles, each of which is a logical combination of contents including at least video;
first management information (110) for managing and controlling said first entity information;
one or a plurality of second entity information (121), which is compressed and encoded by a second compressing and encoding method, which is different from the first compressing and encoding method, for individually constituting Titles, each of which is a logical combination of contents same as or different from the contents of said first entity information; and
second management information (120) for managing and controlling said first and second entity information.

2. The information recording medium according to claim 1, **characterized in that** said second management information (120) includes, for each Title:
number information for indicating an identification number of said first or second entity information, which is uniquely given to each Title; and
identification information for identifying whether said number information indicates the identification number of said first entity information or the identification number of said second entity information.

3. The information recording medium according to claim 1 or 2, **characterized in that** said second management information (120) includes:
attribute information for indicating the compressing and encoding method for each of said first entity information; and
attribute information for indicating the compressing and encoding method for each of said second entity information.

4. The information recording medium according to any one of claims 1 to 3, **characterized in that** said second management information (120) includes:
total number information for indicating the total number of said first entity information; and
total number information for indicating the total number of said second entity information.

5. The information recording medium according to any one of claims 1 to 4, **characterized in that** said second management information (120) includes:
first menu information, which includes at least video information compressed and encoded by the first or second compressing and encoding method, for indicating a menu for user selection about at least said second entity information out of said first and second entity information; and
attribute information for indicating the first or second compressing and encoding method by which said first menu information is compressed and encoded.

6. The information recording medium according to any one of claims 1 to 5, **characterized in that** said second entity information (121) includes:
second menu information, which includes at least video information compressed and encoded by the first or second compressing and encoding method, for indicating a menu for user selection about at least said second entity information out of said first and second entity information; and
attribute information for indicating the first or second compressing and encoding method by which said second menu information is compressed and encoded.

7. The information recording medium according to any one of claims 1 to 6, **characterized in that** said first management information (110) includes:
third menu information, which includes at least video information compressed and encoded by the first compressing and encoding method, for indicating a menu for user selection about said first entity information; and
attribute information for indicating the first compressing and encoding method by which said third menu information is compressed and encoded.

8. The information recording medium according to any one of claims 1 to 7, **characterized in that** said first entity information (111) includes:
fourth menu information, which includes at least video information compressed and encoded by the first compressing and encoding method, for indicating a menu for user selection about said first entity information; and
attribute information for indicating the first compressing and encoding method by which said fourth menu information is compressed and encoded.

9. The information recording medium according to any one of claims 1 to 8, **characterized in that** said second management information (120) manages and controls said first entity information (111), by specifying said first management information (110), through said specified first management information.

10. An information recording medium **characterized in that**, on said information recording medium, there are recorded:
one or a plurality of entity information (111, 121), which is compressed and encoded by a predetermined compressing and encoding method, for individually constituting Titles, each of which is a logical combination of contents including at least video; and
management information (110, 120) for managing and controlling said entity information,
said management information including:
number information for indicating an identification number of said entity information, which is uniquely given to each Title;
total number information for indicating the total number of said entity information; and
information for indicating a fact that there is no record of another entity information compressed and encoded by another compressing and encoding method, which is different from the predetermined compressing and encoding method.

11. The information recording medium according to claim 10, **characterized in that** said management information (110, 120) includes:
menu information, which includes at least video information compressed and encoded by the predetermined compressing and encoding method or by the another compressing and encoding method, which is different from the predetermined compressing and encoding method, for indicating a menu for user selection about said entity information; and
attribute information for indicating the compressing and encoding method by which said menu information is compressed and encoded.

12. The information recording medium according to claim 10, **characterized in that** said entity information (111, 121) includes:
menu information, which includes at least video information compressed and encoded by the predetermined compressing and encoding method or by the another compressing and encoding method, which is different from the predetermined compressing and encoding method, for indicating a menu for user selection about said entity information; and
attribute information for indicating the compressing and encoding method by which said menu information is compressed and encoded.

13. An information reproducing apparatus for reproducing an information recording medium according to any one of claims 1 to 9,
**characterized in that** said apparatus comprises:
a reading device for reading out information from the information recording medium;
a judgment device for judging whether or not the second management information is recorded on the information recording medium on the basis of the read information; and
a reproduction output device (i) for reproducing and outputting the first or second entity information in accordance with the second management information if it is judged by said judgment device that the second management information is recorded and (ii) for reproducing and outputting the first entity information in accordance with first management information if it is judged by said judgment device that the second management information is not recorded.

14. An information reproducing apparatus for reproducing an information recording medium according to claim 2,
**characterized in that** said apparatus comprises:
a selection device for selecting a Title to be reproduced out of the Titles recorded on the information recording medium;
a reading device for reading out information from the information recording medium;
a judgment device for judging whether or not the second management information is recorded on the information recording medium on the basis of the read information;
a first identification device for identifying an identification number of the first or second entity information corresponding to the selected Title, in accordance with the number information in the second management information if it is judged by said judgment device that the second management information is recorded;
a second identification device for identifying whether the recognized identification number is the identification number of the first entity information or the identification number of the second entity information, on the basis of the identification information in the second management information; and
a reproduction output device for reproducing and outputting the first or second entity information corresponding to the selected Title on the basis of identification results by said first and second identification devices.

15. The information reproducing apparatus according to claim 13 or 14, **characterized in that** said reproduction output device includes a decoding device (88) which includes a first decoder corresponding to the first compressing and encoding method and a second decoder corresponding to the second compressing and encoding method.

16. An information reproducing method of reproducing an information recording medium according to any one of claims 1 to 9,
**characterized in that** said method comprises:
a judgment process of judging whether or not the second management information is recorded on the information recording medium on the basis of information read by a reading device for reading out the information from the information recording medium; and
a reproduction output process (i) of reproducing and outputting the first or second entity information in accordance with the second management information if it is judged by said judgment process that the second management information is recorded and (ii) of reproducing and outputting the first entity information in accordance with first management information if it is judged by said judgment process that the second management information is not recorded.

17. An information reproducing method of reproducing an information recording medium according to claim 2,
**characterized in that** said method comprises:
a judgment process of judging whether or not the second management information is recorded on the information recording medium on the basis of information read by a reading device for reading out the information from the information recording medium;
a first identification process of identifying an identification number of the first or second entity information corresponding to a Title which is selected as a Title to be reproduced out of the Titles recorded on the information recording medium, in accordance with the number information in the second management information if it is judged by said judgment process that the second management information is recorded;
a second identification process of identifying whether the recognized identification number is the identification number of the first entity information or the identification number of the second entity information, on the basis of the identification information in the second management information; and
a reproduction output process of reproducing and outputting the first or second entity information corresponding to the selected Title on the basis of identification results by said first and second identification processes.

18. A computer program of instructions **characterized in that** said computer program of instructions makes a computer function as an information reproducing apparatus according to any one of claims 13 to 15.
